(19) Europäisches Patentamt
European Patent Office
Office européen des brevets

(11) EP 2 205 644 B1

(12) **EUROPÄISCHE PATENTSCHRIFT**

(45) Veröffentlichungstag und Bekanntmachung des Hinweises auf die Patenterteilung:
**17.08.2011 Patentblatt 2011/33**

(21) Anmeldenummer: **08840909.9**

(22) Anmeldetag: **17.10.2008**

(51) Int Cl.:
***C08F 2/44*** *(2006.01)* ***C08F 2/24*** *(2006.01)*

(86) Internationale Anmeldenummer:
**PCT/EP2008/064075**

(87) Internationale Veröffentlichungsnummer:
**WO 2009/053317 (30.04.2009 Gazette 2009/18)**

(54) **VERFAHREN ZUR HERSTELLUNG EINER WÄSSRIGEN KOMPOSITPARTIKEL-DISPERSION**

METHOD FOR PRODUCING AN AQUEOUS COMPOSITE-PARTICLE DISPERSION

PROCÉDÉ POUR PRÉPARER UNE DISPERSION AQUEUSE CONTENANT DES PARTICULES COMPOSITES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.10.2007 EP 07119197**

(43) Veröffentlichungstag der Anmeldung:
**14.07.2010 Patentblatt 2010/28**

(73) Patentinhaber: **BASF SE**
**67056 Ludwigshafen (DE)**

(72) Erfinder:
- **LOHMEIJER, Bas**
  **68199 Mannheim (DE)**
- **TUCHBREITER, Arno**
  **67346 Speyer (DE)**
- **WIESE, Harm**
  **69514 Laudenbach (DE)**

(56) Entgegenhaltungen:
**WO-A-03/000760**
**DE-A1- 4 402 408**
**US-A1- 2004 077 768**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 205 644 B1

## Beschreibung

Gegenstand der vorliegenden Erfindung ist ein Verfahren zur Herstellung einer wässrigen Dispersion von aus Polymerisat und feinteiligem anorganischem Feststoff aufgebauten Partikeln (wässrige Kompositpartikel-Dispersion), bei dem ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergierhilfsmittels nach der Methode der radikalisch wässrigen Emulsionspolymerisation polymerisiert werden, welches dadurch gekennzeichnet ist, dass

a) der anorganische Feststoff einen mittleren Teilchendurchmesser > 0 und ≤ 100 nm aufweist,

b) 1 bis 1000 Gew.-Teile an anorganischem Feststoff pro 100 Gew.-Teile Monomere eingesetzt werden,

c) 0,01 bis 10 Gew.-Teile einer siliziumhaltigen Verbindung (Silanverbindung) pro 100 Gew.-Teile Monomere eingesetzt werden, wobei die Silanverbindung wenigstens eine Si-OH-Gruppe oder wenigstens eine funktionelle Gruppe aufweist, die in entionisiertem Wasser bei einer Temperatur ≤ 100 °C unter Ausbildung einer Si-OH- bzw. einer Si-O-Si-Gruppe hydrolysiert und wobei die Silanverbindung keine radikalisch copolymerisierbare ethylenisch ungesättigte Gruppe aufweist, dabei

d) wenigstens eine Teilmenge des anorganischen Feststoffs in einem wässrigen Polymerisationsmedium in Form einer wässrigen Feststoffdispersion vorgelegt wird, daran anschließend

e) wenigstens eine Teilmenge der Silanverbindung während einer Zeitdauer von ≥ 5 und ≤ 240 Minuten dem wässrigen Polymerisationsmedium zudosiert wird, daran anschließend

f) gegebenenfalls ≤ 20 Gew.-% der Monomeren dem wässrigen Polymerisationsmedium zugegeben und radikalisch polymerisiert werden, und daran anschließend

g) die gegebenenfalls verbliebene Restmenge des anorganischen Feststoffs, die gegebenenfalls verbliebene Restmenge der Silanverbindung, die gegebenenfalls verbliebene Restmenge oder die Gesamtmenge der Monomeren dem wässrigen Polymerisationsmedium unter Polymerisationsbedingungen zudosiert werden.

Gegenstand der vorliegenden Erfindung sind ebenfalls die nach dem erfindungsgemäßen Verfahren zugänglichen wässrigen Kompositpartikel-Dispersionen und deren Verwendung sowie die aus den wässrigen Kompositpartikel-Dispersionen zugänglichen Kompositpartikelpulver und deren Verwendung.

Wässrige Kompositpartikel-Dispersionen sind allgemein bekannt. Es handelt sich dabei um fluide Systeme, die aus mehreren ineinander verschlungenen Polymerisatketten bestehenden Polymerisatknäuel (die sogenannte Polymermatrix) und feinteiligem anorganischen Feststoff aufgebaute Partikel (Kompositpartikel) in wässrigem Dispergiermedium in disperser Verteilung befindlich enthalten. Der mittleren Durchmesser der Kompositpartikel liegt in der Regel im Bereich ≥ 10 nm und ≤ 1000 nm, oft im Bereich ≥ 50 nm und ≤ 400 nm und häufig im Bereich ≥ 100 nm und ≤ 300 nm.

Kompositpartikel und Verfahren zu ihrer Herstellung in Form von wässrigen Kompositpartikel-Dispersionen sowie deren Verwendung sind dem Fachmann bekannt und beispielsweise in den Schriften US-A 3,544,500, US-A 4,421,660, US-A 4,608,401, US-A 4,981,882, EP-A 104 498, EP-A 505 230, EP-A 572 128, GB-A 2 227 739, WO 01/18081, WO 01/29106, WO 03/000760, WO 06/072464 sowie in Long et al., Tianjin Daxue Xuebao 1991, 4, Seiten 10 bis 15, Bourgeat-Lami et al., Die Angewandte Makromolekulare Chemie 1996, 242, Seiten 105 bis 122, Paulke et al., Synthesis Studies of Paramagnetic Polystyrene Latex Particles in Scientific and Clinical Applications of Magnetic Carriers, Seiten 69 bis 76, Plenum Press, New York, 1997, Armes et al., Advanced Materials 1999, 11, Nr. 5, Seiten 408 bis 410 offenbart.

Für die vorliegende Erfindung ist von folgendem Stand der Technik auszugehen.

Van Herk et al. offenbaren in Macromolecules 2006, 39, Seiten 4654 bis 4656, die Verkapselung von u.a. mit Silanmonomeren kovalent modifizierten Schichtsilikaten in Latexpartikeln nach der sogenannten "starved-feed"-Emulsions polymerisations methode unter Emulgator-freien Bedingungen. Die Schichtsilikate werden dabei in Dichlormethan modifiziert und vor dem Einsatz in der Emulsionspolymerisation über mehrere Prozessschritte aufgearbeitet.

Bourgeat-Lami et al. beschreiben in Progress in Solid State Chemistry 2006, 34, Seiten 121 bis 137, die hydrophob kovalente Modifizierung von Schichtsilikaten in Toluol, deren Aufreinigung und anschließendem Einsatz in der Emulsionspolymerisation.

In der WO 02/24756 wird die Verwendung von hydrophobierten Schichtsilikaten in der Suspensions- und Miniemulsionspolymerisation offenbart.

Darüber hinaus offenbart die WO 02/24758 den Einsatz von "leicht modifizierten" hydrophobierten Schichtsilikaten in der Emulsionspolymerisation, wobei jedoch die spezifische Modifizierung nicht beschrieben wird.

Die US-A 2004/77768 offenbart die Silanisierung von Silikasolen mit organischen Silanverbindungen. Dabei erfolgt die Silanisierung mittels wässrigen Lösungen der organischen Silanverbindungen bei einer Temperatur < 50 °C. Abhängig von den eingesetzten Silikasolen und den organischen Silanverbindungen kann die Mischzeit bis zu 3 Stunden betragen, wobei jedoch Mischzeiten < 5 Minuten und insbesondere < 1 Minute bevorzugt sind. Die erhaltenen silanisierten Silikasole können in einem nachfolgenden Schritt mit organischen Bindemitteln abgemischt und die erhaltenen Bindemittelmischungen in unterschiedlichsten Anwendungsgebieten eingesetzt werden.

In der unveröffentlichten europäischen Patentanmeldung mit dem Aktenzeichen 07107552.7 wird die Verwendung ethylenisch ungesättigter Monomere, welche siliziumhaltige Gruppen enthalten, zur Herstellung wässriger Kompositpartikel-Dispersionen offenbart.

Aufgabe der vorliegenden Erfindung war die Bereitstellung eines neuen Herstellverfahrens für stabile wässrige Kompositpartikel-Dispersionen unter Verwendung von nicht copolymerisierbaren organischen Siliziumverbindung.

Für das erfindungsgemäße Verfahren wird klares Wasser, beispielsweise klares Trinkwasser, insbesondere vorteilhaft jedoch entionisiertes Wasser eingesetzt, dessen Gesamtmenge so bemessen wird, dass sie ≥ 30 und ≤ 99 Gew.-% und vorteilhaft ≥ 35 und ≤ 95 Gew.-% und insbesondere vorteilhaft ≥ 40 und ≤ 90 Gew.-%, bezogen auf die wässrige Kompositpartikel-Dispersion, beträgt. Erfindungsgemäß wird wenigstens eine Teilmenge des Wassers in Verfahrensschritt d) im Polymerisationsgefäß vorgelegt und die gegebenenfalls verbliebene Restmenge in wenigstens einem der nachfolgenden Verfahrensschritten e) bis g) zudosiert. Vorteilhaft erfolgt die Zugabe der gegebenenfalls verbliebenen Restmenge an Wasser in den Verfahrensschritten f) und g), bevorzugt Verfahrensschritt g).

Für das erfindungsgemäße Verfahren sind prinzipiell alle diejenigen feinteiligen anorganischen Feststoffe geeignet, welche einen mittleren Teilchendurchmesser > 0 und ≤ 100 nm aufweisen.

Als erfindungsgemäß einsetzbare feinteilige anorganische Feststoffe sind prinzipiell Metalle, Metallverbindungen, wie Metalloxide und Metallsalze aber auch Halbmetall-und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec®-Marken der Fa. Sachtleben Chemie GmbH), Zirkonium-(IV)-oxid, Zinn-(II)-oxid, Zinn-(IV)-oxid (beispielsweise kommerziell verfügbar als Nyacol® SN-Marken der Fa. Akzo-Nobel), Aluminiumoxid (beispielsweise kommerziell verfügbar als Nyacol® AL-Marken der Fa. Akzo-Nobel), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec®-Marken der Fa. Sachtleben Chemie GmbH), Nickel-(II)-oxid, Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol® YTTRIA-Marken der Fa. Akzo-Nobel), Cer-(IV)-oxid (beispielsweise kommerziell verfügbar als Nyacol® CEO2-Marken der Fa. Akzo-Nobel) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal®-Marken der Fa. Condea-Chemie GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit [$Ca_5\{(PO_4)_3OH\}$], Orthosilikate, wie Lithiumorthosilikat, Calcium-/Magnesiumorthosilikat, Aluminiumorthosilikat, Eisen-(II)-orthosilikat, Eisen-(III)-orthosilikat, Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel® SH und Optigel® EX 0482 (Marken der Südchemie AG), Saponit® SKS-20 und Hektorit® SKS 21 (Marken der Hoechst AG) sowie Laponite® RD und Laponite® GS (Marken der Rockwood Holdings Inc.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tartrate,

wie Calciumtartrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calci-umlaurat, Linoleate, wie Calciumlinoleat, Oleate, wie Calciumoleat, Eisen-(II)-oleat oder Zinkoleat.

Als wesentliche erfindungsgemäß einsetzbare Halbmetallverbindung sei amorphes und/oder in unterschiedlichen Kristallstrukturen vorliegendes Siliziumdioxid genannt. Erfindungsgemäß geeignetes Siliziumdioxid ist kommerziell verfügbar und kann beispielsweise als Aerosil® (Marke der Fa. Degussa AG), Levasil® (Marke der Fa. Bayer AG), Ludox® (Marke der Fa. DuPont), Nyacol® und Bindzil® (Marken der Fa. Akzo-Nobel) und Snowtex® (Marke der Fa. Nissan Chemical Industries, Ltd.) bezogen werden. Erfindungsgemäß geeignete Nichtmetallverbindungen sind beispielsweise kolloidal vorliegender Graphit oder Diamant.

Als feinteilige anorganische Feststoffe sind solche besonders geeignet, deren Löslichkeit in Wasser bei 20 °C und 1 atm (= 1,013 bar absolut) ≤ 1 g/l, bevorzugt ≤ 0,1 g/l und insbesondere ≤ 0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Produkte der Nanofil®-, Optigel®-, Cloisite®- (Marken der Fa. Südchemie AG), Somasif®-, Lucentite®- (Marken der Fa. CBC Japan Co., Ltd.), Saponit®- Hektorit®- (Marken der Fa. Höchst AG) sowie Laponite®-Reihen (Marke der Fa. Rockwood Holdings, Inc.), Eisen-(II)-oxid, Eisen-(III)-oxid, Eisen-(II/III)-oxid, Titandioxid, Hydroxylapatit, Zinkoxid und Zinksulfid.

Bevorzugt ist der wenigstens eine feinteilige anorganische Feststoff ausgewählt aus der Gruppe umfassend Siliziumdioxid, Schichtsilikate, Aluminiumoxid, Hydroxyaluminiumoxid, Calciumcarbonat, Magnesiumcarbonat, Calciumorthophosphat, Magnesiumorthophosphat, Eisen-(II)-oxid, Eisen-(III)-oxid, Eisen-(II/III)-oxid, Zinn-(IV)-oxid, Cer-(IV)-oxid, Yttrium-(III)-oxid, Titandioxid, Hydroxylapatit, Zinkoxid und Zinksulfid. Insbesondere bevorzugt sind siliziumhaltige Verbindungen, wie pyrogene Kieselsäure, kolloidale Kieselsäure und/oder Schichtsilikate.

Vorteilhaft können auch die kommerziell verfügbaren Verbindungen der Aerosil®-, Levasil®-, Ludox®-, Nyacol®- und Bindzil®-Marken (Siliziumdioxid), Nanofil®-, Optigel®-, Somasif®-, Cloisite®-, Lucentite®-, Saponit®-, Hektorit®- sowie Laponite®-Marken (Schichtsilikate), Disperal®-Marken (Hydroxyaluminiumoxid), Nyacol® AL-Marken (Aluminiumoxid), Hombitec®-Marken (Titandioxid), Nyacol® SN-Marken (Zinn-(IV)-oxid), Nyacol® YTTRIA-Marken (Yttrium-(III)-oxid), Nyacol® CEO2-Marken (Cer-(IV)-oxid) und Sachtotec®-Marken (Zinkoxid) in den erfindungsgemäßen Verfahren eingesetzt werden.

Die zur Herstellung der Kompositpartikel einsetzbaren feinteiligen anorganischen Feststoffe sind so beschaffen, dass die im wässrigen Polymerisationsmedium dispergierten Feststoffteilchen einen Teilchendurchmesser von ≤ 100 nm aufweisen. Erfolgreich werden solche feinteiligen anorganischen Feststoffe eingesetzt, deren dispergierte Teilchen einen Teilchendurchmesser > 0 nm aber ≤ 90 nm, ≤ 80 nm, ≤ 70 nm, ≤ 60 nm, ≤ 50 nm, ≤ 40 nm, ≤ 30 nm, ≤ 20 nm oder ≤ 10 nm und alle Werte dazwischen aufweisen. Mit Vorteil werden feinteilige anorganische Feststoffe eingesetzt, welche einen Teilchendurchmesser ≤ 50 nm aufweisen.

Die Bestimmung der Teilchengröße des feinteiligen anorganischen Feststoffs sowie der nach dem erfindungsgemäßen Verfahren erhältlichen Kompositpartikel erfolgt im Rahmen dieser Schrift generell nach der Methode der quasielastischen Lichtstreuung (DIN-ISO 13321) mit einem High Performance Particle Sizer (HPPS) der Fa. Malvern Instruments Ltd..

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D.F. Evans, H. Wennerström in The Colloidal Domain, Seiten 363 bis 405, Verlag Chemie, Weinheim, 1994 und R.J. Hunter in Foundations of Colloid Science, Vol. I, Seiten 10 bis 17, Clarendon Press, Oxford, 1991).

Dabei können die feinteiligen anorganischen Feststoffe erfindungsgemäß sowohl in Form von Pulvern oder in Form stabiler wässriger Feststoffdispersionen, sogenannter Sole eingesetzt werden.

Die Herstellung von stabilen wässrigen Feststoffdispersionen erfolgt dabei häufig direkt bei der Synthese der feinteiligen anorganischen Feststoffe in wässrigem Medium oder alternativ durch Eindispergieren der feinteiligen anorganischen Feststoffe in das wässrige Medium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder unter Zuhilfenahme geeigneter Hilfsaggregate, wie beispielsweise Dispergatoren oder Ultraschallsonotroden.

Unter stabilen wässrigen Feststoffdispersionen werden solche wässrigen Feststoffdispersionen verstanden, die bei einer Anfangsfeststoffkonzentration von ≥ 0,1 Gew.-%, bezogen auf die wässrige Feststoffdispersion, noch eine

Stunde nach ihrer Herstellung oder nach homogener Dispergierung der sedimentierten feinteiligen Feststoffe, ohne weiteres Rühren oder Schütteln mehr als 90 Gew.-% des ursprünglich dispergierten Feststoffes in dispergierter Form enthalten.

Die quantitative Bestimmung der Anfangsfeststoffkonzentration und der Feststoffkonzentration nach einer Stunde erfolgt im Rahmen dieser Schrift über die Methode der Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Bezogen auf 100 Gew.-Teile der insgesamt eingesetzten ethylenisch ungesättigten Monomeren (Gesamtmonomerenmenge), werden erfindungsgemäß 0,1 bis 1000 Gew.-Teile, vorteilhaft 1 bis 100 Gew.-Teile und insbesondere vorteilhaft 2 bis 70 Gew.-Teile des anorganischen Feststoffes verwendet.

Das erfindungsgemäße Verfahren erfolgt dergestalt, dass in Verfahrensschritt d) wenigstens eine Teilmenge, vorteilhaft ≥ 10, ≥ 30 oder ≥ 50 Gew.-% und insbesondere vorteilhaft ≥ 60, ≥ 70, ≥ 80 oder ≥ 90 Gew.-% der Gesamtmenge des anorganischen Feststoffs im wässrigen Polymerisationsmedium unter Ausbildung einer wässrigen Feststoffdispersion vorgelegt wird. Die gegebenenfalls verbliebene Restmenge an anorganischem Feststoff wird dem wässrigen Polymerisationsmedium in Verfahrensschritt g) unter Polymerisationsbedingungen diskontinuierlich in einer oder mehreren Teilmengen oder kontinuierlich in gleich bleibenden oder sich verändernden Mengenströmen, insbesondere in Form einer stabilen wässrigen Feststoffdispersion zudosiert. Mit Vorteil wird jedoch in Verfahrensschritt d) die Gesamtmenge des anorganischen Feststoffs im wässrigen Polymerisationsmedium in Form einer wässrigen Feststoffdispersion vorgelegt. Wird der anorganische Feststoff in Pulverform eingesetzt, so kann es vorteilhaft sein, das feinteilige Feststoffpulver unter Zuhilfenahme geeigneter Hilfsaggregate, wie beispielsweise Rührer, Dispergatoren oder Ultraschallsonotroden im wässrigen Polymerisationsmedium zu dispergieren.

Bei der Herstellung der wässrigen Kompositpartikel-Dispersionen werden allgemein Dispergierhilfsmittel mitverwendet, die sowohl die feinteiligen anorganischen Feststoffteilchen als auch die Monomerentröpfchen und die gebildeten Kompositpartikel im wässrigen Polymerisationsmedium dispers verteilt halten und so die Stabilität der erzeugten wässrigen Kompositpartikel-Dispersionen gewährleisten. Als Dispergierhilfsmittel kommen sowohl die zur Durchführung von radikalischen wässrigen Emulsionspolymerisationen üblicherweise eingesetzten Schutzkolloide als auch Emulgatoren in Betracht.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Geeignete neutrale Schutzkolloide sind beispielsweise Polyvinylalkohole, Polyalkylenglykole, Cellulose-, Stärke- und Gelatinederivate.

Als anionische Schutzkolloide, d.h. Schutzkolloide, deren dispergierend wirkende Komponente wenigstens eine negative elektrische Ladung aufweist, kommen beispielsweise Polyacrylsäuren und Polymethacrylsäuren und deren Alkalimetallsalze, Acrylsäure, Methacrylsäure, 2-Acrylamido-2-methylpropansulfonsäure, 4-Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol, in Betracht.

Geeignete kationische Schutzkolloide, d.h. Schutzkolloide, deren dispergierend wirkende Komponente wenigstens eine positive elektrische Ladung aufweist, sind beispielsweise die am Stickstoff protonierten und/oder alkylierten Derivate von N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltenden Homo- und Copolymerisate.

Selbstverständlich können auch Gemische aus Emulgatoren und/oder Schutzkolloiden eingesetzt werden. Häufig werden als Dispergierhilfsmittel ausschließlich Emulgatoren eingesetzt, deren relative Molekulargewichte im Unterschied zu den Schutzkolloiden üblicherweise unter 1500 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z.B. ethoxilierte Mono-, Di- und Tri-Alkylphenole (EO-Grad: 3 bis 50, Alkylrest: $C_4$ bis $C_{12}$) sowie ethoxilierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxilate, EO-Grad: 3 bis 8), Lutensol® AO-Marken ($C_{13}C_{15}$-Oxoalkoholethoxilate, EO-Grad: 3 bis 30), Lutensol® AT-Marken ($C_{16}C_{18}$-Fettalkoholethoxilate, EO-Grad: 11 bis 80), Lutensol® ON-Marken ($C_{10}$-Oxoalkoholethoxilate, EO-Grad: 3 bis 11) und die Lutensol® TO-Marken ($C_{13}$-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkyla-

rylsulfonsäuren (Alkylrest: $C_9$ bis $C_{18}$).

Als weitere anionische Emulgatoren haben sich ferner Verbindungen der allgemeinen Formel III

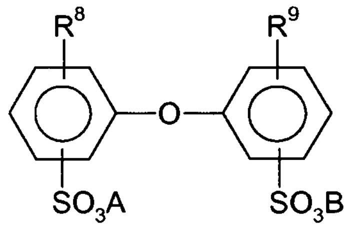

(III)

worin $R^8$ und $R^9$ H-Atome oder $C_4$- bis $C_{24}$-Alkyl bedeuten und nicht gleichzeitig H-Atome sind, und A und B Alkalimetallionen und/oder Ammoniumionen sein können, erwiesen. In der allgemeinen Formel III bedeuten $R^8$ und $R^9$ bevorzugt lineare oder verzweigte Alkylreste mit 6 bis 18 C-Atomen, insbesondere mit 6, 12 und 16 C-Atomen oder -H, wobei $R^8$ und $R^9$ nicht beide gleichzeitig H-Atome sind. A und B sind bevorzugt Natrium, Kalium oder Ammonium, wobei Natrium besonders bevorzugt ist. Besonders vorteilhaft sind Verbindungen III, in denen A und B Natrium, $R^8$ ein verzweigter Alkylrest mit 12 C-Atomen und $R^9$ ein H-Atom oder $R^8$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen III sind allgemein bekannt, z.B. aus US-A 4 269 749, und im Handel erhältlich.

Geeignete kationenaktive Emulgatoren sind in der Regel einen $C_6$- bis $C_{18}$-Alkyl-, - Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethlyammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Häufig werden zur Herstellung der wässrigen Kompositpartikel-Dispersionen zwischen 0,1 bis 10 Gew.-%, oft 0,5 bis 7,0 Gew.-% und häufig 1,0 bis 5,0 Gew.-% an Dispergierhilfsmittel, jeweils bezogen auf die Gesamtmenge an wässriger Kompositpartikel-Dispersion, eingesetzt. Bevorzugt werden Emulgatoren, insbesondere nichtionische und/oder anionische Emulgatoren verwendet. Mit besonderem Vorteil werden anionische Emulgatoren eingesetzt.

Erfindungsgemäß ist es möglich, gegebenenfalls eine Teil- oder die Gesamtmenge an Dispergierhilfsmittel im Polymerisationsgefäß als Bestandteil des eine Teil- oder die Gesamtmenge des anorganischen Feststoffs enthaltenden wässrigen Polymerisationsmediums vorzulegen [Verfahrensschritt d)]. Es ist aber auch möglich, die Gesamtmenge oder die gegebenenfalls verbliebene Restmenge an Dispergierhilfsmittel während der Verfahrensschrittes e) bis g) dem wässrigen Polymerisationsmedium zuzuführen. Die Gesamtmenge oder die gegebenenfalls verbliebene Restmenge an Dispergierhilfsmittel kann dem wässrigen Polymerisationsmedium dabei diskontinuierlich in einer oder mehreren Portionen oder kontinuierlich mit gleichbleibenden oder sich verändernden Mengenströmen zudosiert werden. Insbesondere vorteilhaft erfolgt die Dosierung wenigstens einer Teilmenge der Dispergierhilfsmittel während der Polymerisationsreaktion in Verfahrensschritt g) kontinuierlich mit gleichbleibenden Mengenströmen, insbesondere als Bestandteil einer wässrigen Monomerenemulsion.

Erfindungsgemäß werden $\geq 0{,}01$ und $\leq 10$ Gew.-Teile, bevorzugt $\geq 0{,}05$ und $\leq 5$ Gew.-Teile und insbesondere bevorzugt $\geq 0{,}1$ und $\leq 2$ Gew.-Teile, wenigstens einer siliziumhaltigen Verbindung (Silanverbindung) pro 100 Gew.-Teile Monomere eingesetzt, wobei die Silanverbindung wenigstens eine Si-OH-Gruppe oder wenigstens eine funktionelle Gruppe aufweist, die in entionisiertem Wasser bei einer Temperatur $\leq 100$ °C unter Ausbildung einer Si-OH- bzw. einer Si-O-Si-Gruppe hydrolysiert und wobei die Silanverbindung keine radikalisch copolymerisierbare ethylenisch ungesättigte Gruppe aufweist.

Insbesondere Silanverbindungen mit wenigstens einer $C_1$-$C_4$-Alkoxy- oder Halogengruppe unterliegen bei Temperaturen $\leq 100$ °C in entionisiertem Wasser der vollständigen Hydrolyse. Gut geeignet sind Silanverbindungen, die bei einer Einwaage von 1 g in 100 g entionisiertem Wasser bei 90 °C innerhalb 1 Stunde vollständig hydrolysieren. Dabei kann der Hydrolyseverlauf spektroskopisch, beispielsweise mittels IR-Spektroskopie oder Gaschromatographie verfolgt werden.

Vorteilhaft wird als Silanverbindung eine Verbindung der allgemeinen Formel I

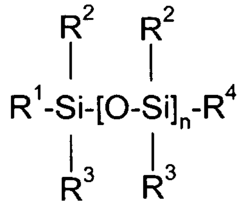

(I)

mit

$R^1$ bis $R^4$: OH, $C_1$-$C_4$-Alkoxy, insbesondere Methoxy, Ethoxy, n-Propoxy oder I- sopropoxy, n-Butoxy, Halogen, insbesondere Fluor, Chlor, Brom, Jod, unsubstituiertes oder substituiertes $C_1$-$C_{30}$-Alkyl, insbesondere unsubsti- tuiertes Alkyl, wie Methyl, Ethyl, n-Propyl, iso-Propyl, n-Butyl, iso-Butyl, tert.-Butyl, n-Pentyl, n-Octyl, n-Decyl, Hexadecyl oder substituiertes Alkyl, beispielsweise substituiert mit Amino-, Acetoxy-, Benzoyl-, Halogen-, Cy- ano-, Glycidyloxy-, Hydroxy-, Isocyanato-, Mercapto-, Phenoxy-, Phosphato- oder Isothiocyanatogruppen, unsubstituiertes oder substituiertes (entsprechende Substituenten siehe $C_1$-$C_{30}$-Alkyl) $C_5$-$C_{15}$-Cycloalkyl, insbesondere Cyclopentyl oder Cyclohe- xyl, $C_1$-$C_4$-Alkylen-[O-$CH_2CH_2$]$_x$-O-Z, wobei Alkylen insbesondere für Ethylen oder Propylen steht, unsubstituiertes oder substituiertes (entsprechende Substituenten siehe $C_1$-$C_{30}$-Alkyl) $C_6$-$C_{10}$-Aryl, insbesondere Phenyl, Halogenophenyl oder Chlorosulfonylphenyl, unsubstituiertes oder substituiertes (entsprechende Substituenten siehe $C_1$-$C_{30}$-Alkyl) $C_7$-$C_{12}$-Aralkyl, insbesondere Benzyl,

Z: Wasserstoff, $C_1$-$C_4$-Alkyl, wie Methyl, Ethyl, n-Propyl, iso-Propyl, n-Butyl, iso-Butyl, tert.-Butyl, bevorzugt Wasserstoff oder Methyl,

n: ganze Zahl von 0 bis 5, bevorzugt 0 bis 1, insbesondere bevorzugt 0,

x: ganze Zahl von 1 bis 10, bevorzugt 1 bis 5 und insbesondere bevorzugt 2 bis 4,

wobei wenigstens einer der Reste $R^1$ bis $R^4$ für OH, $C_1$-$C_4$-Alkoxy oder Halogen steht,
oder
eine Verbindung der allgemeinen Formel II

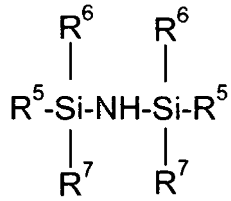

(II)

mit

$R^5$ bis $R^7$: unsubstituiertes oder substituiertes $C_1$-$C_{30}$-Alkyl, wie unter $R^1$ bis $R^4$ be- schrieben, unsubstituiertes oder substituiertes $C_5$-$C_{15}$-Cycloalkyl, insbesondere Cyc- lopentyl oder Cyclohexyl, unsubstituiertes oder substituiertes $C_6$-$C_{10}$-Aryl, insbesondere Phenyl, unsubstituiertes oder substituiertes $C_7$-$C_{12}$-Aralkyl, insbesondere Benzyl

eingesetzt wird.

Als Silanverbindungen lassen sich erfindungsgemäß vorteilhaft 2-Acetoxyethyltrichlorosilan, 2-Acetoxyethyltriethoxysilan, 2-Acetoxyethyltrimethoxysilan, Acetoxymethyltriethoxysilan, Acetoxymethyltrimethoxysilan, 3-Acetoxypropyltrimethoxysilan, 3-Acetoxypropylmethyldichlorosilan, 4-Aminobutyltriethoxysilan, m-N-(2-Aminoethyl)aminomethylphenethyltrimethoxysilan, p-N-(2-Aminoethyl)aminomethylphenethyltrimethoxysilan, N-(2-Aminoethyl)-3-aminopropylmethyldimethoxysilan, N-(2-Aminoethyl)-3-aminopropyl-trihydroxysilan, N-(2-Aminoethyl)-3-aminopropyltriethoxysilan, N-(2-Aminoethyl)-3-aminopropyltrimethoxysilan, N-(6-Aminohexyl)-3-aminopropyltriethoxysilan, N-(6-Aminohexyl)-3-aminopropyltrimethoxysilan, 3-Aminopropyltrihydroxysilan, 3-Aminopropyltriethoxysilan, 3-Aminopropyltrimethoxysilan, 3-Benzoylpropyltrimethoxysilan, Benzyldimethylchlorosilan, Benzyltrichlorosilan, Benzyltriethoxysilan,Benzyltrimethoxysilan, [1,3-Bis(glycidyloxy)propy]ltetramethyldisiloxan, N,N-Bis(2-hydroxyethyl)-3-aminopropyltriethoxysilan, o-Bromophenyltrimethoxysilan, m-Bromophenyltrimethoxysilan, p-Bromophenyltrimethoxysilan, 3-Bromopropyltrichlorosilan, 3-Bromopropyltrimethoxysilan, 11-Bromoundecyltrimethoxysilan, 11-Bromoundecyltrichlorosilan, tert-Butyldiphenylmethoxysilan, tert-Butyldiphenylchlorsilan, n-Butyltrichlorosilan, tert-Butyltrichlorosilan, n-Butyltrimethoxysilan, tert-Butyltrimethoxysilan, 3-Trichlorosilylpropionsäuremethylester, Trihydroxysilylessigsäure-Natriumsalz, 4-Chlorobutyldimethylchlorosilan, 2-Chloroethyldichloromethylsilan, 2-Chloroethylmethyldimethoxysilan, 2-Chloroethyltrichlorosilan, Chloromethyldimethylchlorosilan, Chloromethyldimethylethoxysilan, Chloromethyldimethylisopropoxysilan, Chloromethyldimethylchlorosilan, Chloromethylmethyldiethoxysilan, Chloromethylmethyldiisopropoxysilan, p-Chloromethylphenyltrichlorosilan, p-Chloromethylphenyltrimethoxysilan, Chloromethyltrichlorosilan, Chloromethyltriethoxysilan, Chloromethyltrimethoxysilan, o-Chlorophenyltrichlorosilan, m-Chlorophenyltrichlorosilan, p-Chlorophenyltrichlorosilan, o-Chlorophenyltriethoxysilan, m-Chlorophenyltriethoxysilan, p-Chlorophenyltriethoxysilan, 3-Chloropropyldimethylchlorosilan, Chloropropyldimethylmethoxysilan, 3-Chloropropylmethyldichlorosilan, 3-Chloropropylmethyldimethoxysilan, 3-Chloropropyltrichlorosilan, 3-Chloropropyltriethoxysilan, 3-Chloropropyltrimethoxysilan, 2-[4-Chlorosulfonylphenyl]ethyltrichlorosilan, 2-[4-Chlorosulfonylphenyl]ethyltrimethoxysilan, 3-Cyanobutyldimethylchlorosilan, 3-Cyanobutylmethyldichlorosilan, 3-Cyanobutyltrichlorosilan, 2-Cyanoethylmethyldichlorosilan, 2-Cyanoethyltrichlorosilan, 2-Cyanoethyltriethoxysilan, 2-Cyanoethyltrimethoxysilan, 3-Cyanopropyldimethylchlorosilan, 3-Cyanopropylmethyldichlorosilan, 3-Cyanopropylmethyldimethoxysilan, 3-Cyanopropyltrichlorosilan, 3-Cyanopropyltriethoxysilan, 3-Cyanopropyltrimethoxysilan, 11-Cyanoundecyltrichlorosilan, 11-Cyanoundecyltrimethoxysilan, Cyclohexyldimethylchlorosilan, Cyclohexylmethyldichlorosilan, Cyclohexylmethyldimethoxysilan, (Cyclohexylmethyl)trichlorosilan, Cyclohexyltrichlorosilan, Cyclohexyltrimethoxysilan, Cyclopentyltrichlorosilan, Cyclopentyltrimethoxysilan, n-Decyldimethylchlorosilan, n-Decylmethyldichlorosilan, n-Decyltrichlorosilan, n-Decyltriethoxysilane, Di-n-butyldichlorosilan, Di-n-butyldimethoxysilan, (Dichloromethyl)methyldichlorosilan, 1,3-Dichlorotetramethyldisiloxan, N,N-Diethylaminomethyltriethoxysilan, Diethyldichlorosilan, Diethyldiethoxysilan, 2-(Diethylphosphoryl)ethyltriethoxysilan, Dimethyldihydroxysilan, Di-n-hexyldichlorosilan, Diisopropyldichlorosilan, Diisopropyldimethoxysilan, 3-N,N-Dimethylaminopropyltrimethoxysilan, Dimethyldichlorosilan, Dimethyldiethoxysilan, Dimethyldimethoxysilan, 1,3-Dimethyltetramethoxydisiloxan, 3-(2,4-Dinitrophenylamino)propyltriethoxysilan, Di-n-octyldichlorosilan, Diphenyldichlorosilan, Diphenyldiethoxysilan, Diphenyldimethoxysilan, Diphenyldifluorosilan, Diphenylmethylchlorosilan, Diphenylmethylethoxysilan, Diphenyldihydroxysilan, Docosylmethyldichlorosilan, Docosyltrichlorosilan, Dodecyldimethylchlorosilan, Dodecylmethyldichlorosilan, Dodecylmethyldiethoxysilan, Dodecyltrichlorosilan, Dodecyltriethoxysilan, 3-N-Ethylaminoisobutylmethyldiethoxysilan, 3-N-Ethylaminoisobutyltrimethoxysilan, Ethyldimethylchlorosilan, Ethylmethyldichlorosilan, m-Ethylphenethyltrimethoxysilan, E-thyltriacetoxysilane, Ethyltrichlorosilan, Ethyltriethoxysilan, Ethyltrimethoxysilan, 3-Glycidyloxypropyldimethylethoxysilan, 3-Glycidyloxypropylmethyldiethoxysilan, 3-Glycidyloxypropylmethyldimethoxysilan, 3-Glycidyloxypropyltriethoxysilan, 3-Glycidyloxypropyltrimethoxysilan, n-Heptylmethyldichlorosilan, n-Heptyltrichlorosilan, n-Hexadecyltrichlorosilan, n-Hexadecyltriethoxysilan, n-Hexadecyltrimethoxysilan, n-Hexylmethyldichlorosilan, n-Hexyltrichlorosilan, n-Hexyltriethoxysilan, Hydroxymethyltriethoxysilan, 3-Iodopropyltrimethoxysilan, Isobutyldimethylchlorosilan, Isobutylmethyldimethoxysilan, Isobutyltrichlorosilan, Isobutyltriethoxysilan, Isobutyltrimethoxysilan, 3-Isocyanatopropyldimethylchlorosilan, 3-Isocyanatopropyltriethoxysilan, 3-Isocyanatopropyltrimethoxysilan, Isooctyltrichlorosilan, Isooctyltrimethoxysilan, Isopropyldimethylchlorosilan, Isopropylmethyldichlorosilan, 3-Mercaptopropylmethyldimethoxysilan, 3-Mercaptopropyltriethoxysilan, 3-Mercaptopropyltrimethoxysilan, 3-(p-Methoxyphenyl)propylmethyldichlorosilan, 3-(p-Methoxyphenyl)propyltrichlorosilan, 2-[Methoxy(polyethylenoxy)]propyltrimethoxysilan, 3-Methoxypropyltrimethoxysilan, 3-(N-Methylamino)propylmethyldimethoxysilan, 3-(N-Methylamino)propyltrimethoxysilan, Methyltribromosilan, Methyltrichlorosilan, Methyltriethoxysilan, Methyltrimethoxysilan, Methyltrifluorosilane, Methyltri-n-propoxysilan, Tris(methoxyethoxy)methylsilan, n-Octadecyldimethylchlorosilan, n-Octadecyldimethylmethoxysilan, n-Octadecyldimethyl(3-trimethoxysilylpropyl)ammoniumchlorid, n-Octadecylmethoxydichlorosilan, n-Octadecylmethyldichlorosilan, n-Octadecylmethyldiethoxysilan, n-Octadecylmethyldimethoxysilan, n-Octadecyltrichlorosilan, n-Octadecyltriethoxysilan, n-Octadecyltrimethoxysilan, S-(Octanoyl)mercaptopropyltriethoxysilan, n-Octyldimethylchlorosilan, n-Octyldimethylmethoxysilan, n-Octyltrichlorosilan, n-Octyltriethoxysilan, n-Octyltrimethoxysilan, n-Pentyltrichlorosilan, n-Pentyltriethoxysilan, 2-Phenylethyltrichlorosilan, 2-Phenylethyltrimethoxysilan, 3-Phenoxypropyltrichlorosilan, 3-(N-Phenylamino)propyttriethoxysilan, 3-(N-Phenylamino)propyltrimethoxysilan, Phenylmethyldichlorosilan, Phenylmethyldiethoxysilan, Phenylmethyldimethoxysilan, Phenyltrichlorosilan, Phenyltriethoxysilan, Phenyltrifluorosilan, Phenyltrimethoxysilan, n-Propyldimethylchlorosilan, n-Propylmethyldichlorosilan, n-Propyltrichlorosilan, n-Propyltriethoxysilan, n-Propyltrimethoxysilan, 1,3-Diethoxy-1,1,3,3-tetramethyldisiloxan, Tetra-n-propoxysilan, 3-Thiocyanatopropyltriethoxysilan, p-Tolyltrichlorosilan, p-Tolyltrimethoxysilan, Triacontyldimethylchlorosilan, Triacontyltrichlorosilan, Tri-tert-butoxyhydroxysilan, 3-(2-Sulfolanyloxyethoxy)propyltriethoxysilan, 3-(tert-Butyloxycarbonylamino)propyltriethoxysilan, 3-(Ethyloxycarbonylamino)propyltriethoxysilan, 3-[(2-Hydroxypolyethylenoxy)carbonylamino]propyltriethoxysilan, 3-(Triethoxysilylpropyl)dihydro-3,5-furandion, (3,3,3-Trifluoropropyl)trimethoxysilan, 3-(Hydroxysulfonyl)propyltrihydroxysilan, 3-(Methylphosphonyl)propyltrihydroxysilan, Triisopropylsilan, N-[(5-Trimethoxysilyl)-2-aza-1-oxypentyl]caprolactam, (3-Trimethoxysilylpropyl)diethylentriamintriessigsäure-Trinatriumsalz, N-Trimethoxysilylpropyl-N,N,N-trimethylammoniumchlorid, Trimethylchlorosilan, Trimethylbromosilan, Trimethylethoxysilan, Trimethylfluorosilan, Trimethyliodosilan, Trimethylmethoxysilan, Trimethyl-n-propoxysilan, Triphenylchlorosilan, Triphenylethoxysilan, Triphenylhydroxysilan, 3-Ureidopropyltriethoxysilan, 3-Ureidopropyltrimethoxysilan, 1,1,1,3,3,3-Hexamethyldisilazan, 1,3-Di-n-butyl-1,1,3,3-tetramethyldisilazan einsetzen. Selbstverständlich können erfindungsgemäß auch Mischungen von Silanverbindungen eingesetzt werden.

Besonders bevorzugt werden als Silanverbindung Methyltrimethoxysilan, n-Propyltrimethoxysilan, n-Octyltrimethoxysilan, n-Decyltriethoxysilan, n-Hexadecyltrimethoxysilan, Dimethyldimethoxysilan, Trimethylmethoxysilan, 3-Acetoxypropyltrimethoxysilan, 3-Aminopropyltrimethoxysilan, 3-Chloropropyltrimethoxysilan, 3-Glycidyloxypropyltrimethoxysilan, 3-Mercaptopropyltrimethoxysilan, Phenyltrimethoxysilan und/oder 1,1,1,3,3,3-Hexamethyldisilazan eingesetzt.

Im Verfahrensschritt e) wird wenigstens eine Teilmenge der Silanverbindungen während einer Zeitdauer ≥ 5 und ≤ 240 Minuten, vorteilhaft ≥ 30 und ≤ 120 Minuten und insbesondere vorteilhaft ≥ 45 und ≤ 90 Minuten dem wässrigen Polymerisationsmedium zudosiert. Dabei erfolgt die Dosierung vorteilhaft mit einem kontinuierlichen gleichbleibenden Mengenstrom. In Verfahrensschritt e) werden erfindungsgemäß ≥ 0,1 und ≤ 100 Gew.-%, vorteilhaft ≥ 5 und ≤ 70 Gew.-% und insbesondere vorteilhaft ≥ 10 und ≤ 50 Gew.-% an Silanverbindungen, bezogen auf die Gesamtmenge der Silanverbindungen, dem wässrigen Polymerisationsmedium zudosiert.

Die Silanverbindung kann dabei in Substanz oder gelöst in wässrigem oder organischem Medium eingesetzt werden. Mit Vorteil wird die Silanverbindung in Substanz, d.h. ohne jedes weitere Lösungsmittel eingesetzt.

In der Regel erfolgt Verfahrensschritt e) bei einer Temperatur des wässrigen Polymerisationsmediums ≥ 20 °C, mit Vorteil bei einer Temperatur ≥ 50 und ≤ 100 °C und mit besonderem Vorteil bei einer Temperatur ≥ 60 und ≤ 100 °C und insbesondere vorteilhaft ≥ 75 und ≤ 95 °C.

Die gegebenenfalls verbliebene Restmenge an Silanverbindungen kann dem wässrigen Polymerisationsmedium in Verfahrensschritt g) diskontinuierlich in einer oder mehreren Portionen oder kontinuierlich mit gleichbleibenden oder sich verändernden Mengenströmen zudosiert werden. Insbesondere vorteilhaft erfolgt die Dosierung der Silanverbindungen während der Polymerisationsreaktion in Verfahrensschritt g) kontinuierlich mit gleichbleibenden Mengenströmen, insbesondere als Bestandteil einer wässrigen Monomerenemulsion.

Erfindungsgemäß kommen als ethylenisch ungesättigte Monomeren alle diejenigen in Betracht, die sich in wässrigem Medium in einfacher Weise radikalisch polymerisieren lassen und welche dem Fachmann aus der wässrigen Emulsionpolymerisation geläufig sind. Hierzu zählen u.a. Ethylen, vinylaromatische Monomere, wie Styrol, α-Methylstyrol, o-Chlorstyrol oder Vinyltoluote, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-din-butylester, Nitrile α,β-monoethylenisch ungesättigter Carbonsäuren, wie Acrylnitril sowie $C_{4-8}$-konjugierte Diene, wie 1,3-Butadien und Isopren. Die genannten Monomere bilden in der Regel die Hauptmonomeren, die, bezogen auf die Gesamtmonomerenmenge normalerweise einen Anteil von ≥ 50 Gew.-%, ≥ 80 Gew.-% oder ≥ 90 Gew.-% auf sich vereinen. In aller Regel weisen diese Monomeren in Wasser bei Normalbedingungen [20 °C, 1 atm (absolut)] lediglich eine mäßige bis geringe Löslichkeit auf.

Weitere Monomere, welche üblicherweise die innere Festigkeit der Verfilmungen der Polymermatrix erhöhen, weisen normalerweise wenigstens eine Hydroxy-, N-Methylol-oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylengtykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Erfindungsgemäß werden die vorgenannten Monomeren in Mengen von bis zu 5 Gew.-%, häufig 0,1 bis 3 Gew.-% und oft 0,5 bis 2 Gew.-%, jeweils bezogen auf die Gesamtmonomerenmenge zur Polymerisation eingesetzt.

Daneben können als Monomere zusätzlich solche ethylenisch ungesättigten Monomere S eingesetzt werden, die entweder wenigstens eine Säuregruppe und/oder deren entsprechendes Anion oder solche ethylenisch ungesättigten Monomere A, die wenigstens eine Amino-, Amido-, Ureido- oder N-heterocyclische Gruppe und/oder deren am Stickstoff protonierten oder alkylierten Ammoniumderivate enthalten. Bezogen auf die Gesamtmonomerenmenge, beträgt die

Menge an Monomeren S bzw. Monomeren A bis zu 10 Gew.-%, oft 0,1 bis 7 Gew.-% und häufig 0,2 bis 5 Gew.-%.

Als Monomere S werden ethylenisch ungesättigte Monomere mit wenigstens einer Säuregruppe eingesetzt. Dabei kann die Säuregruppe beispielsweise eine Carbonsäure-, Sulfonsäure-, Schwefelsäure-, Phosphorsäure- und/oder Phosphonsäuregruppe sein. Beispiele für solche Monomere S sind Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat. Erfindungsgemäß lassen sich aber auch die Ammonium- und Alkalimetallsalze der vorgenannten wengistens eine Säuregruppe aufweisenden ethylenisch ungesättigten Monomeren einsetzen. Als Alkalimetall insbesondere bevorzugt ist Natrium oder Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie die Mono- und Di-Ammonium-, -Natrium- und -Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure als Monomere S eingesetzt.

Als Monomere A werden ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere A, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethylacrylat, 2-(N-Methylamino)ethylmethacrylat, 2-(N-Ethylamino)ethylacrylat, 2-(N-Ethylamino)ethylmethacrylat, 2-(N-n-Propylamino)ethylacrylat, 2-(N-n-Propylamino)ethylmethacrylat, 2-(N-iso-Propylamino)ethylacrylat, 2-(N-iso-Propylamino)ethylmethacrylat, 2-(N-tert.-Butylamino)ethylacrylat, 2-(N-tert.-Butylamino)ethylmethacrylat (beispielsweise kommerziell verfügbar als Norsocryl® TBAEMA der Fa. Elf Atochem), 2-(N,N-Dimethylamino)ethylacrylat (beispielsweise kommerziell verfügbar als Norsocryl® A-DAME der Fa. Elf Atochem), 2-(N,N-Dimethylamino)ethylmethacrylat (beispielsweise kommerziell verfügbar als Norsocryl® MADAME der Fa. Elf Atochem), 2-(N,N-Diethylamino)ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-iso-propylamino)ethylacrylat, 2-(N,N-Di-iso-propylamino)ethylmethacrylat, 3-(N-Methylamino)propylacrylat, 3-(N-Methylamino)propylmethacrylat, 3-(N-Ethylamino)propylacrylat, 3-(N-Ethylamino)propylmethacrylat, 3-(N-n-Propylamino)propylacrylat, 3-(N-n-Propylamino)propylmethacrylat, 3-(N-iso-Propylamino)propylacrylat, 3-(N-iso-Propylamino)propylmethacrylat, 3-(N-tert.-Butylamino)propylacrylat, 3-(N-tert.-Butylamino)propylmethacrylat, 3-(N,N-Dimethylamino)propylacrylat, 3-(N,N-Dimethylamino)propylmethacrylat, 3-(N,N-Diethylamino)propylacrylat, 3-(N,N-Diethylamino)propylmethacrylat, 3-(N,N-Di-n-propylamino)propylacrylat, 3-(N,N-Di-n-propylamino)propylmethacrylat, 3-(N,N-Di-iso-propylamino)propylacrylat und 3-(N,N-Di-iso-propylamino)propylmethacrylat.

Beispiele für Monomere A, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N,N'-Methylenbisacrylamid, N-(Diphenylmethyl)acrylamid, N-Cyclohexylacrylamid, aber auch N-Vinylpyrrolidon und N-Vinylcaprolactam.

Beispiele für Monomere A, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl® 100 der Fa. Elf Atochem).

Beispiele für Monomere A, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden als Monomere A folgende Verbindungen eingesetzt: 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Abhängig vom pH-Wert des wässrigen Reaktionsmediums kann ein Teil oder die Gesamtmenge der vorgenannten stickstoffhaltigen Monomere A in der am Stickstoff protonierten quartären Ammoniumform vorliegen.

Als Monomere A, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl® ADAMQUAT MC 80 der Fa. Elf Atochem), 2-(N,N,N-Trimethylammonium)ethylmethacrylatchlorid (beispielsweise kommerziell verfügbar als Norsocryl® MADQUAT MC 75 der Fa. Elf Atochem), 2-(N-Methyl-N,N-diethylammonium)ethylacrylatchlorid, 2-(N-Methyl-N,N-diethylammonium)ethylmethacrylatchlorid, 2-(N-Methyl-N,N-dipropylammonium)ethylacrylatchlorid, 2-(N-Methyl-N,N-dipropylammonium)ethylmethacrylat, 2-(N-Benzyl-N,N-dimethylammonium)ethylacrylatchlorid (beispielsweise kommerziell verfügbar als Norsocryl® ADAMQUAT BZ 80 der Fa. Elf Atochem), 2-(N-Benzyl-N,N-dimethylammonium)ethylmethacrylatchlorid (beispielsweise kommerziell verfügbar als Norsocryl® MADQUAT BZ 75 der Fa. Elf Atochem), 2-(N-Benzyl-N,N-diethylammonium)ethylacrylatchlorid, 2-(N-Benzyl-N,N-diethylammonium)ethylmethacrylatchlorid, 2-(N-Benzyl-N,N-dipropylammonium)ethylacrylatchlorid, 2-(N-Benzyl-N,N-dipropylammonium)ethylmethacrylatchlorid, 3-(N,N,N-Trimethylammonium)propylacrylatchlorid, 3-(N,N,N-Trimethylammonium)propylmethacrylatchlorid, 3-(N-Methyl-N,N-diethylammonium)propylacrylatchlorid, 3-(N-Methyl-N,N-diethylammonium)propylmethacrylatchlorid, 3-(N-Methyl-N,N-dipropylammonium)propylacrylatchlorid, 3-(N-Methyl-N,N-dipropylammonium) propylmethacrylatchlorid, 3-(N-Benzyl-N,N-dimethylammonium)propylacrylatchlorid, 3-(N-Benzyl-N,N-dimethylammonium)propylmethacrylatchlorid, 3-(N-Benzyl-N,N-diethylammonium)propylacrylatchlorid, 3-(N-Benzyl-N,N-diethylammonium)propylmethacrylatchlorid, 3-(N-Benzyl-N,N-dipropylammonium)propylacrylatchlorid und 3-(N-Benzyl-N,N-dipropylammonium)propylmethacrylatchlorid. Selbstverständlich können an Stelle der genannten Chloride auch die entsprechenden Bromide und Sulfate eingesetzt werden.

Bevorzugt werden 2-(N,N,N-Trimethylammonium)ethylacrylatchlorid, 2-(N,N,N-Trimethylammonium)ethylmethacrylatchlorid, 2=(N-Benzyl-N,N-dimethylammonium)ethylacrylatchlorid und 2-(N-Benzyl-N,N-dimethylammonium) ethylmethacrylatchlorid verwendet.

Selbstverständlich können auch Gemische der vorgenannten ethylenisch ungesättigten Monomere S bzw. B eingesetzt werden.

Häufig kann es vorteilhaft sein, zusätzlich Monomere einzusetzen, welche wenigstens eine silziumhaltige funktionelle Gruppe aufweisen (Silanmonomere), wie beispielsweise Vinylalkoxysilane, wie insbesondere Vinyltrimethoxysilan, Vinyltriethoxysilan, Vinyltriisopropoxysilan, Vinyltriphenoxysilan, Vinyltris(dimethylsiloxy)silan, Vinyltris(2-methoxyethoxy)silan, Vinyltris(3-methoxypropoxy)silan und/oder Vinyltris(trimethylsiloxy)silan, Acryloxysilane, wie insbesondere 2-(Acryloxyethoxy)trimethylsilan, Acryloxymethyltrimethylsilan, (3-Acryloxypropyl)dimethylmethoxysilan, (3-Acryloxypropyl)methylbis(trimethylsiloxy)silan, (3-Acryloxypropyl)methyldimethoxysilan, (3-Acryloxypropyl)trimethoxysilan und/oder (3-Acryloxypropyl)tris(trimethylsiloxy)silan, Methacryloxysilane, wie insbesondere (3-Methacryloxypropyl) trimethoxysilan, (3-Methacryloxypropyl)triethoxysilan (Methacryloxymethyl)methyldiethoxysilan und/oder (3-Methacryloxypropyl)methyldiethyloxysilan. Erfindungsgemäß besonders vorteilhaft werden Acryloxysilane und/oder Methacryloxysilane, insbesondere Methacryloxysilane, wie bevorzugt (3-Methacryloxypropyl)trimethoxysilan, (3-Methacryloxypropyl)triethoxysilan, (Methacryloxymethyl)methyldiethoxysilan und/oder (3-Methacryloxypropyl)methyldiethyloxysilan eingesetzt. Die Menge an Silanmonomere beträgt ≤ 10 Gew.-%, vorteilhaft ≥ 0,01 und ≤ 5 Gew.-% und insbesondere vorteilhaft ≥ 0,1 und ≤ 2 Gew.-%, jeweils bezogen auf die Gesamtmonomerenmenge.

Alle vorgenannten ethylenisch ungesättigten Monomere können dabei als separate Einzelströme oder im Gemisch diskontinuierlich in einer oder mehreren Portionen oder kontinuierlich mit gleichbleibenden oder sich ändernden Mengenströmen in Verfahrensstufen f) und g) zudosiert werden. Vorteilhaft erfolgt die Zugabe der ethylenisch ungesättigten Monomeren im Gemisch, insbesondere vorteilhaft in Form einer wässrigen Monomerenemulsion.

Mit besonderem Vorteil wird die Zusammensetzung der ethylenisch ungesättigten Monomeren so gewählt, dass nach deren alleiniger Polymerisation ein Polymerisat resultieren würde, dessen Glasübergangstemperatur ≤ 100 °C, bevorzugt ≤ 60 °C, insbesondere bevorzugt ≤ 40 °C und häufig ≥ -30 °C und oft ≥ -20 °C oder ≥ -10 °C beträgt.

Üblicherweise erfolgt die Bestimmung der Glasübergangstemperatur nach DIN 53 765 (Differential Scanning Calorimetry, 20 K/min, midpoint-Messung).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur $T_g$ von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York, 1966; 2nd Ed. J.Wiley, New York, 1975 und 3rd Ed. J. Wiley, New York, 1989.

Erfindungsgemäß können im Anschluss an Verfahrensschritt e), gegebenenfalls ≤ 20 Gew.-%, vorteilhaft ≥ 1 und ≤ 15 Gew.-% und insbesondere vorteilhaft ≥ 2 und ≤ 10 Gew.-% der Monomeren dem wässrigen Polymerisationsmedium zugegeben und radikalisch polymerisiert werden.

Zur Auslösung der radikalischen Polymerisation kommen alle diejenigen radikalischen Polymerisationsinitiatoren (Radikalinitiatoren) in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AI-BA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des insgesamt eingesetzten Radikalinitiators, bezogen auf die Gesamtmonomerenmenge, 0,1 bis 5 Gew.-%, vorteilhaft 0,5 bis 2 Gew.-%.

Unter Auslösung der Polymerisationsreaktion wird der Start der Polymerisationsreaktion der im wässrigen Polymerisationsmedium vorliegenden Monomeren nach Radikalbildung des Radikalinitiators verstanden. Dabei kann die Auslösung der Polymerisationsreaktion durch Zugabe von Radikalinitiator zum wässrigen Polymerisationsmedium unter Polymerisationsbedingungen erfolgen [Verfahrensschritt g)]. Es ist aber auch möglich, dass eine Teil- oder die Gesamtmenge des Radikalinitiators dem die vorgelegten Monomeren enthaltenden wässrigen Polymerisationsmedium unter Bedingungen, welche nicht geeignet sind eine Polymerisationsreaktion auszulösen, beispielsweise bei tiefer Temperatur, zugegeben werden [Verfahrensschritte e) und f)] und danach im wässrigen Polymerisationsgemisch Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, die Polymerisationstemperatur und der Polymerisationsdruck so ausgewählt, dass der Radikalinitiator eine Halbwertszeit ≤ 3 Stunden, insbesondere vorteilhaft ≤ 1 Stunde und ganz besonders vorteilhaft ≤ 30 Minuten aufweist und dabei immer genügend Startradikale zur Verfügung stehen, um die Polymerisationsreaktion auszulösen bzw. aufrechtzuerhalten.

Als Reaktionstemperatur für die radikalische wässrige Emulsionspolymerisation in Anwesenheit des feinteiligen anorganischen Feststoffs kommt der gesamte Bereich von 0 bis 170 °C in Betracht. Dabei werden in der Regel Temperaturen von 50 bis 120 °C, häufig 60 bis 110 °C und oft 70 bis 100 °C angewendet. Die erfindungsgemäße radikalische wässrige Emulsionspolymerisation kann bei einem Druck kleiner, gleich oder größer 1 atm (Atmosphärendruck) durchgeführt werden, so dass die Polymerisationstemperatur 100 °C übersteigen und bis zu 170 °C betragen kann. Vorzugsweise wird in Anwesenheit leichtflüchtiger Monomere B, beispielsweise Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei 1 atm (absolut) unter Sauerstoffausschluss, insbesondere unter Inertgasatmosphäre, wie beispielsweise unter Stickstoff oder Argon durchgeführt.

Dabei kann der Radikalinitiator prinzipiell diskontinuierlich oder in einer oder mehreren Portionen oder kontinuierlich mit gleich bleibenden oder sich ändernden Mengeströmen zudosiert werden. Die Zugabe des Radikalinitiators an sich ist unkritisch und dem Fachmann geläufig oder kann von diesem in wenigen routinemäßigen Vorversuchen an das entsprechende Polymerisationssystem angepasst werden.

Werden im Verfahrensschritt f) Monomeren vorgelegt, so werden diese durch Zugabe wenigstens einer Teilmenge der Radikalinitiators und Einstellen von Polymerisationsbedingungen wenigstens bis zu einem Umsatz ≥ 70 Gew.-%, bevorzugt ≥ 80 Gew.-% und insbesondere ≥ 90 Gew.-% polymerisiert.

Daran anschließen werden die gegebenenfalls verbliebene Restmenge des anorganischen Feststoffs, die gegebenenfalls verbliebene Restmenge der Silanverbindung, die gegebenenfalls verbliebene Restmenge oder die Gesamtmenge der Monomeren dem wässrigen Polymerisationsmedium unter Polymerisationsbedingungen diskontinuierlich in einer oder mehreren Portionen oder vorteilhaft kontinuierlich mit gleich bleibenden oder sich ändernden und insbesondere vorteilhaft mit gleich bleibenden Mengenströmen zudosiert. Mit Vorteil erfolgt dabei die Zugabe wenigstens einer Teilmenge des Radikalinitiators kontinuierlich mit gleich bleibendem Mengenstrom. Dabei werden die Polymerisationsbedingungen vorteilhaft so gewählt, dass die eingesetzten Monomeren bis zu einem Umsatz ≥ 90 Gew.-%,

bevorzugt ≥ 95 Gew.-% und insbesondere ≥ 98 Gew.-% polymerisiert werden.

Wesentlich für das erfindungsgemäße Verfahren ist, dass dem wässrigen Polymerisationsmedium prinzipiell in untergeordnetem Maße auch gut wasserlösliche organische Lösungsmittel, wie beispielsweise Methanol, Ethanol, Isopropanol, Butanole, aber auch Aceton etc. zugesetzt werden kann. Von Bedeutung ist allerdings, dass die Menge an zugesetztem organischem Lösungsmittel so bemessen ist, dass sie am Ende von Verfahrensschritt e) ≤ 10 Gew.-%, vorteilhaft ≤ 5 Gew.-% und insbesondere vorteilhaft ≤ 2 Gew.-%, jeweils bezogen auf die Gesamtmenge an Wasser der erfindungsgemäß erhältlichen wässrigen Kompositpartikel-Dispersion, beträgt. Mit Vorteil werden erfindungsgemäß keinerlei solche Lösungsmittel zugesetzt.

Neben den vorgenannten Komponenten können im erfindungsgemäßen Verfahren zur Herstellung der wässrigen Kompositpartikel-Dispersion optional auch radikalketten-übertragende Verbindungen eingesetzt werden, um die Molekulargewichte der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen. Die optional eingesetzte Gesamtmenge der radikalkettenübertragenden Verbindungen, bezogen auf die Gesamtmonomerenmenge, ist in der Regel ≤ 5 Gew.-%, oft ≤ 3 Gew.-% und häufig ≤ 1 Gew.-%.

Abhängig von der Stabilität der eingesetzten wässrigen Feststoffdispersionen können die Verfahrensschritte e) bis g) im sauren, neutralen oder basischen pH-Wertbereich durchgeführt werden. Beim Einsatz von Schichtsilikaten beträgt der pH-Wert vorteilhaft ≥ 5 und ≤ 11, insbesondere vorteilhaft ≥ 6 und ≤ 10 (jeweilige Probe gemessen bei 20 °C und 1 atm). Die Einstellung der pH-Wertbereiche ist dem Fachmann geläufig und erfolgt insbesondere mit nichtoxidierenden anorganischen Säuren, wie Salz-, Schwefel- oder Phosphorsäure oder anorganischen Basen, wie Ammoniak, Natrium- oder Kaliumhydroxid.

Selbstverständlich können die nach dem erfindungsgemäßen Verfahren zugänglichen wässrigen Kompositpartikel-Dispersionen auch weitere, dem Fachmann geläufige optionale Hilfsstoffe, wie beispielsweise so genannte Verdicker, Entschäumer, Puffersubstanzen, Konservierungsmittel in üblichen Mengen enthalten.

Die erfindungsgemäß zugänglichen wässrigen Kompositpartikel-Dispersionen weisen üblicherweise einen Gesamtfeststoffgehalt ≥ 1 und ≤ 70 Gew.-%, häufig ≥ 5 und ≤ 65 Gew.-% und oft ≥ 10 und ≤ 60 Gew.-% auf.

Die erfindungsgemäß zugänglichen Kompositpartikel besitzen in der Regel Teilchendurchmesser von > 10 und ≤ 1000 nm, häufig ≥ 25 und ≤ 500 nm sowie oft ≥ 50 und ≤ 250 nm. Die Bestimmung der Teilchengröße der Kompositpartikel erfolgte im Rahmen dieser Schrift generell nach der Methode der quasielastischen Lichtstreuung (DIN-ISO 13321) mit einem High Performance Particle Sizer (HPPS) der Fa. Malvern Instruments Ltd.

Die erfindungsgemäß zugänglichen Kompositpartikel können unterschiedliche Strukturen aufweisen. Dabei können die Kompositpartikel ein oder mehrere der feinteiligen anorganische Feststoffteilchen enthalten. Die feinteiligen anorganischen Feststoffteilchen können vollständig von der Polymermatrix umhüllt sein. Es ist aber auch möglich, dass ein Teil der feinteiligen anorganischen Feststoffteilchen von der Polymermatrix umhüllt ist, während ein anderer Teil auf der Oberfläche der Polymermatrix angeordnet ist. Selbstverständlich ist es auch möglich, dass ein Großteil der feinteiligen anorganischen Feststoffteilchen auf der Oberfläche der Polymermatrix gebunden ist.

Auch können die nach Abschluss der Polymerisationsreaktion im wässrigen Polymerisationsmedium verbliebenen Restmengen an nicht umgesetzten Monomeren oder anderen leichtflüchtigen Verbindungen durch Dampf- und/ oder Inertgasstrippung bzw. durch chemische Desodorierung, wie sie beispielsweise in den Schriften DE-A 4419518, EP-A 767180 oder DE-A 3834734 beschrieben sind, entfernt werden, ohne dass sich die Eigenschaften der wässrigen Kompositpartikel-Dispersionen nachteilig verändern.

Aus den über das erfindungsgemäße Verfahren zugänglichen wässrigen Kompositpartikel-Dispersionen lassen sich in einfacher Weise anorganische Feststoffteilchen enthaltende Polymerisatfilme herstellen. Diese Polymerisatfilme

weisen gegenüber den keine anorganischen Feststoffteilchen enthaltenden Polymerisatfilmen in der Regel eine erhöhte mechanische Festigkeit, ein geringeres Weißanlaufen, eine bessere Haftung an mineralischen Oberflächen, eine verbesserte Resistenz gegenüber organischen Lösemitteln sowie eine erhöhte Kratzfestigkeit, Blockfestigkeit und Wärmestandfestigkeit auf.

Wässrige Kompositpartikel-Dispersionen, welche nach dem beschriebenen erfindungsgemäßen Verfahren hergestellt werden, eignen sich daher insbesondere als Bindemittel, zur Herstellung einer Schutzschicht, als Komponente in Klebstoffen, zur Modifizierung von Zement- und Mörtelformulierungen oder in der medizinischen Diagnostik (vgl. z.B. K. Mosbach und L. Andersson, Nature, 1977, 270, Seiten 259 bis 261; P.L. Kronick, Science 1978, 200, Seiten 1074 bis 1076; US-A 4,157,323). Darüber hinaus lassen sich die Kompositpartikel auch als Katalysatoren in verschiedenen wässrigen Dispersionssystemen einsetzen.

Auch sei festgehalten, dass die erfindungsgemäß zugänglichen wässrigen Kompositpartikel-Dispersionen in einfacher Weise zu redispergierbaren Kompositpartikelpulvern trockenbar sind (z.B. mittels Gefriertrocknung oder Sprühtrocknung). Dies gilt insbesondere dann, wenn die Glasübergangstemperatur der Polymermatrix der erfindungsgemäß zugänglichen Kompositpartikel ≥ 50 °C, vorzugsweise ≥ 60 °C, besonders bevorzugt ≥ 70 °C, ganz besonders bevorzugt ≥ 80 °C und insbesondere bevorzugt ≥ 90 °C bzw. ≥ 100 °C beträgt. Die Kompositpartikelpulver eignen sich als Additive für Kunststoffe, Komponenten für Tonerformulierungen oder Zusatzstoffe in elektrophotographischen Anwendungen sowie als Komponenten in Zement- und Mörtelformulierungen.

Das erfindungsgemäße Verfahren ermöglicht den einstufigen und lösungsmittelfreien Zugang zu wässrigen Kompositpartikel-Dispersionen, unter Verwendung von Silanverbindungen, welche nicht radikalisch copolymerisierbar sind. Darüber hinaus weisen die aus den erfindungsgemäßen wässrigen Kompositpartikel-Dispersionen zugänglichen Verfilmungen gute/verbesserte Reißkraft- und/oder Reißdehnungswerte auf. Auch zeigen die Verfilmungen eine homogenere Verteilung des anorganischen Feststoffs.

Die Erfindung soll anhand der nachfolgenden nicht einschränkenden Beispiele erläutert werden.

## Beispiele

### a) Herstellung der wässrigen Kompositpartikel-Dispersionen

#### Beispiel 1

In einem 2 l-Vierhalskolben, ausgerüstet mit einem Rückflusskühler, einem Thermometer, einem mechanischen Rührer sowie einer Dosiervorrichtung, wurden bei 20 bis 25 °C (Raumtemperatur) und 1 atm (absolut) unter Stickstoffatmosphäre und Rühren (200 Umdrehungen pro Minute) 489 g entionisiertes Wasser, 20 g pulverförmiges Schichtsilikat Laponite® RDS (Marke der Firma Rockwood Holdings, Inc.; mittlerer Durchmesser im delaminierten, dispergierten Zusand: 20 bis 50 nm) innerhalb von 5 Minuten zugegeben. Um das Schichtsilikat vollständig zu delaminieren wurde die Vorlage für 15 Minuten weiter gerührt (200 Umdrehungen pro Minute) und anschließend auf 82 °C aufgeheizt. Anschließend wurde über eine Zulaufleitung innerhalb einer Stunde 1,1 g n-Octyltrimethoxysilan kontinuierlich zudosiert. Dann wurden eine Lösung bestehend aus 40 g entionisiertem Wasser, 2,1 g einer 10 gew.-%igen wässrigen Natriumhydroxidlösung und 0,6 g Natriumperoxodisulfat über eine weitere separate Zulaufleitung innerhalb von 2 Minuten hinzugegeben und 5 Minuten gewartet. Anschließend wurde das Reaktionsgemisch auf 85 °C aufgeheizt. Parallel dazu stellte man als Zulauf 1 eine homogene Emulsion bestehend aus 401 g entionisiertem Wasser, 8,9 g einer 45 gew.-%igen wässrige Lösung von Dowfax® 2A1, 18,4 g einer 10 gew.-%igen wässrigen Natriumhydroxidlösung, 4 g Methacrylsäure, 118 g n-Butylacrylat, 60 g Methylmethacrylat, 16 g Ethylacrylat und 1,6 g n-Octyltrimethoxysilan und als Zulauf 2 eine Mischung aus 161 g entionisiertem Wasser, 8,5 g einer 10 gew.-%igen wässrigen Natriumhydroxidlösung und 2,4 g Natriumperoxodisulfat, her. Die beiden Zuläufe wurden nach dem Aufheizen gleichzeitig beginnend innerhalb von 2 Stunden kontinuierlich mit gleich bleibenden Mengenströmen zudosiert. Abschließend wurde die Reaktionsmischung noch 30 Minuten bei Reaktionstemperatur gerührt und schließlich auf Raumtemperatur abgekühlt.

Die so erhaltene wässrige Kompositpartikel-Dispersion wies einen Feststoffgehalt von 18,8 Gew.-%, bezogen auf das Gesamtgewicht der wässrigen Kompositpartikeldispersion, auf.

Der Feststoffgehalt wurde generell bestimmt, indem ca. 1 g der Kompositpartikel-Dispersion in einem offenen Aluminiumtigel mit einem Innendurchmesser von ca. 3 cm in einem Trockenschrank bei 150 °C bis zur Gewichtskonstanz getrocknet wurde. Zur Bestimmung des Feststoffgehalts wurden jeweils zwei separate Messungen durchgeführt und der entsprechende Mittelwert gebildet.

Der pH-Wert der Kompositpartikel-Dispersion betrug 9,4.

Der pH-Wert wurde generell mittels eines Micropal pH538-Gerätes der Fa. Wissenschaftlich-Technische-Werkstätten (WTW) GmbH bei Raumtemperatur bestimmt.

Die Bestimmung der Teilchengröße der Kompositpartikel erfolgte generell nach der Methode der quasielastischen Lichtstreuung (DIN-ISO 13321) mit einem High Performance Particle Sizer (HPPS) der Fa. Malvern Instruments

Ltd. Es wurde eine mittlere-Teilchengröße von 118 nm ermittelt.

Beispiel 2

Die Herstellung von Beispiel 2 erfolgte analog Beispiel 1 mit dem Unterschied, dass 0,2 g n-Octyltrimethoxysilan vorgelegt und 2,7 g n-Octyltrimethoxysilan als Bestandteil der Monomerenemulsion dosiert wurden.
Die so erhaltene wässrige Kompositpartikel-Dispersion wies einen Feststoffgehalt von 19,0 Gew.-%, bezogen auf das Gesamtgewicht der wässrigen Kompositpartikel-Dispersion, auf.
Der pH-Wert der Kompositpartikel-Dispersion betrug 9,1.
Es wurde eine mittlere Teilchengröße von 128 nm ermittelt.

Beispiel 3

Die Herstellung von Beispiel 3 erfolgte analog Beispiel 1 mit dem Unterschied, dass 0,1 g n-Octyltrimethoxysilan und 0,1 g 3-Methacryloxypropyltrimethoxysilan vorgelegt und 1,5 g n-Octyltrimethoxysilan und 1,0 g 3-Methacryloxypropyltrimethoxysilan als Bestandteil der Monomerenemulsion dosiert wurden.
Die so erhaltene wässrige Kompositpartikel-Dispersion wies einen Feststoffgehalt von 19,0 Gew.-%, bezogen auf das Gesamtgewicht der wässrigen Kompositpartikel-Dispersion, auf.
Der pH-Wert der Kompositpartikel-Dispersion betrug 8,9.
Es wurde eine mittlere Teilchengröße von 122 nm ermittelt.
Mittels der Analytischen Ultrazentrifuge konnte auch nachgewiesen werden, dass die erhaltenen Kompositpartikel eine homogene Dichte von 1,13 g/$cm^3$ aufwiesen. Es konnten keine freien Schichtsilikat-Feststoffteilchen nachgewiesen werden (vgl. hierzu auch S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Vergleichsbeispiel 1

Die Herstellung von Vergleichsbeispiel 1 erfolgte analog Beispiel 1 mit dem Unterschied, dass die Gesamtmenge an n-Octyltrimethoxysilan als Bestandteil der Monomerenemulsion in Zulauf 1 dosiert wurde.
Die so erhaltene wässrige Kompositpartikel-Dispersion wies einen Feststoffgehalt von 18,3 Gew.-%, bezogen auf das Gesamtgewicht der wässrigen Kompositpartikel-Dispersion, auf.
Der pH-Wert der Kompositpartikel-Dispersion betrug 8,9.
Es wurde eine mittlere Teilchengröße von 115 nm ermittelt.
Mittels der Analytischen Ultrazentrifuge konnte ein Anteil von ca. 2 Gew.-% an freien Schichtsilikaten, bezogen auf den Feststoffgehalt der wässrigen Kompositpartikel-Dispersion, nachgewiesen werden.

Vergleichsbeispiel 2

Die Herstellung von Vergleichsbeispiel 2 erfolgte analog Beispiel 1 mit dem Unterschied, dass keinerlei n-Octyltrimethoxysilan eingesetzt wurde.
Die so erhaltene wässrige Kompositpartikel-Dispersion wies einen Feststoffgehalt von 18,5 Gew.-%, bezogen auf das Gesamtgewicht der wässrigen Kompositpartikel-Dispersion, auf.
Der pH-Wert der Kompositpartikel-Dispersion betrug 9,0.
Es wurde eine mittlere Teilchengröße von 103 nm ermittelt.
Mittels der Analytischen Ultrazentrifuge konnte ein Anteil von ca. 10 Gew.-% an freien Schichtsilikaten, bezogen auf den Feststoffgehalt der wässrigen Kompositpartikel-Dispersion, nachgewiesen werden.

Vergleichsbeispiel 3

Die Herstellung von Vergleichsbeispiel 3 erfolgte analog Beispiel 1 mit dem Unterschied, dass die Gesamtmenge an n-Octyltrimethoxysilan innerhalb von 1 Minute zum Schichtsilikat dosiert wurde.
Die so erhaltene wässrige Kompositpartikel-Dispersion wies einen Feststoffgehalt von 18,7 Gew.-%, bezogen auf das Gesamtgewicht der wässrigen Kompositpartikel-Dispersion, auf.
Der pH-Wert der Kompositpartikel-Dispersion betrug 8,8.
Es wurde eine mittlere Teilchengröße von 117 nm ermittelt.
Mittels der Analytischen Ultrazentrifuge konnte ein Anteil von ca. 10 Gew.-% an freien Schichtsilikaten, bezogen

auf den Feststoffgehalt der wässrigen Kompositpartikel-Dispersion, nachgewiesen werden.

b) Anwendungstechnische Untersuchungen

Reißkraft und Reißdehnung

Von den wässrigen Kompositpartikel-Dispersionen der Beispiele 1, 2 und 3 sowie von den Vergleichsbeispielen 1 bis 3 wurden Verfilmungen hergestellt und von diesen die Reißkraft bzw. die Reißdehnung bestimmt.

Die bruchmechanischen Eigenschaften der vorgenannten Kompositpartikel-Dispersionsfilme wurden im Zugversuch nach DIN 53504 bestimmt. Die Dicke der Dispersionsfilme betrug 0,4 bis 0,5 mm und die Abzugsgeschwindigkeit 25,4 mm/min. Vor Beginn der Untersuchung wurden die entsprechenden Mengen der Kompositpartikel-Dispersionen auf einen Teflon-Träger aufgetragen und zur Ausbildung der Dispersionsfilme 14 Tage im Klimaraum bei 23 °C und 50 % relativer Luftfeuchtigkeit gelagert. Anschließend wurden die erhaltenen Kompositpartikel-Dispersionsfilme vom Teflon-Träger abgelöst. Die in der nachfolgenden Tabelle angegebenen Werte sind jeweils die Mittelwerte aus jeweils 5 separaten Messungen.

| Beispiel | Reißkraft RK (N/mm$^2$) | Reißdehnung RD (%) | Zähigkeit (RK x RD) |
|---|---|---|---|
| 1 | 2,0 | 820 | 1640 |
| 2 | 1,9 | 850 | 1615 |
| 3 | 2,6 | 770 | 2002 |
| Vergleichsbeispiel 1 | 1,7 | 760 | 1292 |
| Vergleichsbeispiel 2 | 1,4 | 740 | 1036 |
| Vergleichsbeispiel 3 | 1,3 | 750 | 975 |

## Patentansprüche

1. Verfahren zur Herstellung einer wässrigen Dispersion von aus Polymerisat und feinteiligem anorganischem Feststoff aufgebauten Partikeln (wässrige Kompositpartikel-Dispersion), bei dem ethylenisch ungesättigte Monomere in wässrigem Medium dispers verteilt und mittels wenigstens eines radikalischen Polymerisationsinitiators im Beisein wenigstens eines dispers verteilten, feinteiligen anorganischen Feststoffes und wenigstens eines Dispergierhilfsmittels nach der Methode der radikalisch wässrigen Emulsionspolymerisation polymerisiert werden, **dadurch gekennzeichnet, dass**

   a) der anorganische Feststoff einen mittleren Teilchendurchmesser > 0 und ≤ 100 nm aufweist,
   b) 1 bis 1000 Gew.-Teile an anorganischem Feststoff pro 100 Gew.-Teile Monomere eingesetzt werden,
   c) 0,01 bis 10 Gew.-Teile einer siliziumhaltigen Verbindung (Silanverbindung) pro 100 Gew.-Teile Monomere eingesetzt werden, wobei die Silanverbindung wenigstens eine Si-OH-Gruppe oder wenigstens eine funktionelle Gruppe aufweist, die in entionisiertem Wasser bei einer Temperatur ≤ 100 °C unter Ausbildung einer Si-OH- bzw. einer Si-O-Si-Gruppe hydrolysiert und wobei die Silanverbindung keine radikalisch copolymerisierbare ethylenisch ungesättigte Gruppe aufweist, dabei
   d) wenigstens eine Teilmenge des anorganischen Feststoffs in einem wässrigen Polymerisationsmedium in Form einer wässrigen Feststoffdispersion vorgelegt wird, daran anschließend
   e) wenigstens eine Teilmenge der Silanverbindung während einer Zeitdauer von ≥ 5 und ≤ 240 Minuten dem wässrigen Polymerisationsmedium zudosiert wird, daran anschließend
   f) gegebenenfalls ≤ 20 Gew.-% der Monomeren dem wässrigen Polymerisationsmedium zugegeben und radikalisch polymerisiert werden, und daran anschließend
   g) die gegebenenfalls verbliebene Restmenge des anorganischen Feststoffs, die gegebenenfalls verbliebene Restmenge der Silanverbindung, die gegebenenfalls verbliebene Restmenge oder die Gesamtmenge der Monomeren dem wässrigen Polymerisationsmedium unter Polymerisationsbedingungen zudosiert werden.

2. Verfahren nach Anspruch 1, **dadurch gekennzeichnet, dass** in Verfahrensschritt d) ≥ 50 Gew.-% des anorganischen Feststoffs vorgelegt werden.

**3.** Verfahren nach Anspruch 1 oder 2, **dadurch gekennzeichnet, dass** in Verfahrensschritt d) die Gesamtmenge des anorganischen Feststoffs vorgelegt wird.

**4.** Verfahren nach einem der Ansprüche 1 bis 3, **dadurch gekennzeichnet, dass** Verfahrensschritt e) bei einer Temperatur $\geq 50$ und $\leq 100$ °C durchgeführt wird.

**5.** Verfahren nach einem der Ansprüche 1 bis 4, **dadurch gekennzeichnet, dass** in Verfahrensschritt e) $\geq 5$ und $\leq 70$ Gew.-% der Silanverbindung zudosiert werden.

**6.** Verfahren nach einem der Ansprüche 1 bis 5, **dadurch gekennzeichnet, dass** der anorganische Feststoff siliziumhaltig ist.

**7.** Verfahren nach einem der Ansprüche 1 bis 6, **dadurch gekennzeichnet, dass** als anorganischer Feststoff pyrogene Kieselsäure, kolloidale Kieselsäure und/oder ein Schichtsilikat eingesetzt wird.

**8.** Verfahren nach einem der Ansprüche 1 bis 7, **dadurch gekennzeichnet, dass** das wässrige Polymerisationsmedium am Ende von Verfahrensschritt e) $\leq 10$ Gew.-% an organischem Lösungsmittel, bezogen auf die Gesamtmenge an Wasser enthält.

**9.** Verfahren nach einem der Ansprüche 1 bis 8, **dadurch gekennzeichnet, dass** als Silanverbindung eine Verbindung der allgemeinen Formel I

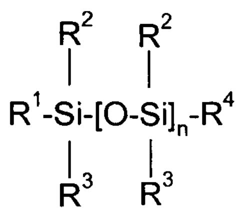

(I)

mit

$R^1$ bis $R^4$: OH, $C_1$-$C_4$-Alkoxy, Halogen unsubstituiertes oder substituiertes $C_1$-$C_{30}$-Alkyl, unsubstituiertes oder substituiertes $C_5$-$C_{15}$-Cycloalkyl, $C_1$-$C_4$-Alkylen-$[O$-$CH_2CH_2]_x$-O-Z, unsubstituiertes oder substituiertes $C_6$-$C_{10}$-Aryl, unsubstituiertes oder substituiertes $C_7$-$C_{12}$-Aralkyl,
Z: Wasserstoff, $C_1$-$C_4$-Alkyl
n: ganze Zahl von 0 bis 5
x: ganze Zahl von 1 bis 10,

wobei wenigstens einer der Reste $R^1$ bis $R^4$ für OH, $C_1$-$C_4$-Alkoxyl oder Halogen steht,
oder
eine Verbindung der allgemeinen Formel II

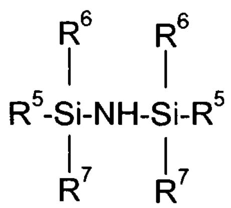

(II)

mit

$R^5$ bis $R^7$: unsubstituiertes oder substituiertes $C_1$-$C_{30}$-Alkyl, unsubstituiertes oder substituiertes $C_5$-$C_{15}$-Cyclo-

alkyl, unsubstituiertes oder substituiertes $C_6$-$C_{10}$-Aryl, unsubstituiertes oder substituiertes $C_7$-$C_{12}$-Aralkyl,

eingesetzt wird.

**10.** Verfahren nach einem der Ansprüche 1 bis 9, **dadurch gekennzeichnet, dass** als Silanverbindung Methyltrimethoxysilan, n-Propyltrimethoxysilan, n-Octyltrimethoxysilan, n-Decyltriethoxysilan, n-Hexadecyltrimethoxysilan, Dimethyldimethoxysilan, Trimethylmethoxysilan, 3-Acetoxypropyltrimethoxysilan, 3-Aminopropyltrimethoxysilan, 3-Chloropropyltrimethoxysilan, 3-Glycidyloxypropyltrimethoxysilan, 3-Mercaptopropyltrimethoxysilan, Phenyltrimethoxysilan und/oder 1,1,1,3,3,3-Hexamethyldisilazan eingesetzt wird.

**11.** Verfahren nach einem der Ansprüche 1 bis 10, **dadurch gekennzeichnet, dass** als Dispergierhilfsmittel ein anionischer und/oder nichtionischer Emulgator eingesetzt wird.

**12.** Verfahren nach einem der Ansprüche 1 bis 11, **dadurch gekennzeichnet, dass** die Zusammensetzung der Monomeren so gewählt wird, dass nach deren Polymerisation ein Polymerisat resultiert, dessen Glasübergangstemperatur ≤ 60 °C beträgt.

**13.** Wässrige Kompositpartikel-Dispersion, erhältlich nach einem Verfahren gemäß einem der Ansprüche 1 bis 12.

**14.** Verwendung einer wässrigen Kompositpartikel-Dispersion gemäß Anspruch 13, als Bindemittel, zur Herstellung einer Schutzschicht, als Komponente in Klebstoffen, zur Modifizierung von Zement- und Mörtelformulierungen oder in der medizinischen Diagnostik.

**15.** Kompositpartikelpulver, erhältlich durch Trocknung einer wässrigen Kompositpartikel-Dispersion gemäß Anspruch 13.

## Claims

**1.** A process for prepaying an aqueous Dispersion of particles composed of addition polymer and finely divided inorganic solid (aqueous composite-particle dispersion), in which process ethylenically unsaturated monomers are dispersely distributed in aqueous medium and polymerized by the method of free-radical aqueous emulsion polymerisation by moans of at least one free-radical polymerisation initiator in the presence of at least one dispersely distributed, finely divided inorganic solid and at least one dispersant, wherein

a) the inorganic solid has an average particle diameter of > 0 nm and ≤ 100 nm,
b) 1 to 1000 parts by weight of inorganic solid are used per 100 parts by weight of monomers,
c) 0.01 to 10 parts by weight of a silicon-containing compound (silane compound) are used per 100 parts by weight of monomers, the silane compound having at least one Si-OH group or at least one functional group which is hydrolyzed in deionized water at a temperature ≤ 100°C. to form an Si-OH or an Si-O-Si group, and the silane compound having no free-radically copolymerizable ethylenically unsaturated group, and
d) at least a portion of the inorganic solid is included in an initial change in an aqueous polymerization medium in the form of an aqueous Dispersion of solids, then
e) at least a portion of the silane compound is metered intro the aqueous polymerization medium over a period of ≥ 5 and ≤ 240 minutes, subsequently
f) optionally ≤ 20% by weight of the monomers are added to the aqueous polymerization medium and free-radically polymerised, and subsequently
g) any remainder of the inorganic solid, any remainder of the silane compound, any remainder or the total amount of the monomers are metered info the aqueous polymerization medium under polymerization conditions.

**2.** The prowess according to claims 1, in step d) of which ≥ 50% by weight of the inorganic solid is included in the initial change.

**3.** The process according to claim 1 or 2, in step d) of which the total amount of the inorganic solid is included in the initial charge.

**4.** The process according to any one of claims 1 to 3, step e) of which is conducted at a temperature ≥ 50 and ≤ 100°C.

**5.** The process according to any one of claims 1 to 4, in step e) of which ≥ 5% and ≤ 70% by weight of the silane compound are metered in.

**6.** The process according to any one of claims 1 to 5, wherein the inorganic solid is silicon-containing.

**7.** The process according to any one of claims 1 to 6, wherein pyrogenic (fumed) silica, colloidal silica and/or a phyllosilicate is used as inorganic solid.

**8.** The process according to any one of claims 1 to 7, wherein at the end of step e) the aqueous polymerization medium contains ≤ 10% by weight of organic solvent, based on the total amount of water.

**9.** The prowess according to any one of claims 1 to 8, wherein use is made as silane compound of a compound of the general formula I

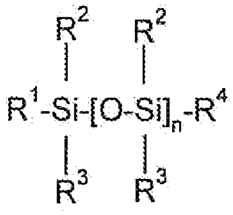 (I)

with

$R^1$ to $R^4$ being OH, $C_1$-$C_4$ alkoxy, halogen unsubstituted or substituted $C_1$-$C_{30}$ alkyl, unsubstituted or substituted $C_5$-$C_{15}$ cycloalkyl, $C_1$-$C_4$ alkylene-$[O\text{-}CH_2CH_2]_x$-O-Z, unsubstituted or substituted $C_6$-$C_{10}$ aryl, unsubstituted or substituted $C_7$-$C_{12}$ aralkyl,
Z being hydrogen, $C_1$-$C_4$ alkyl
n being an integer from 0 to 5
x being an integer from 1 to 10,

with at least one of radicals $R^1$ to $R^4$ bering OH, $C_1$-$C_4$ alkoxy or halogen,
or
a compound of the general formula II

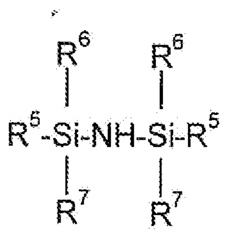 (II)

with

$R^5$ to $R^7$ being unsubstituted or substituted $C_1$-$C_{30}$ alkyl, unsubstituted or substituted $C_5$-$C_{15}$ cycloalkyl, unsubstituted or substituted $C_6$-$C_{10}$ aryl, unsubstituted or substituted $C_7$-$C_{12}$ aralkyl.

**10.** The process according to any one of claims 1 to 9, wherein use is made as silane compound of methyltrimethoxysilane, n-propyltrimethoxysilane, n-octyltrimethoxysilane, n-decyltriethoxysilane, n-hexadecyltrimethoxysilane, dimethyldimethoxysilane, trimethylmethoxysilane, 3-acetoxypropyltrimethoxy-silane, 3-aminopropyltrimethoxysilane, 3-chloropropyltrimethoxysilane, 3-glycidyloxypropyltrimethoxysilane, 3-mercaptopropyltrimethoxysilane, phenyltrimethoxysilane and/or 1,1,1,3,3,3-hexamethyldisilazane.

**11.** The process according to any one of claims 1 to 10, wherein an anionic and/or non-ionic emulsifier is used as dispersant.

**12.** The prowess according to any one of claims 1 to 11, wherein the pomposition of the monomers is chosen such that polymerization thereof results in an addiction polymer having a glass transition temperature ≤ 60°C.

**13.** An aqueous Dispersion of composite particles, obtainable by a process according to any one of claims 1 to 12.

**14.** The use of an aqueous dispersion of composite particles according to claim 13 as a binder, for producing a protective coat, as a component in adhesives, for modifying cement formulations or mortar formulations, or in medical diagnostics.

**15.** A composite-particle powder obtainable by drying an aqueous Dispersion of composite particles according to claim 13.

**Revendications**

**1.** Procédé pour la préparation d'une Dispersion aqueuse de particules constituées de polymérisat et de substance solide inorganique finement divisée (dispersion aqueuse de particules composites), dans lequel des monomères à insaturation éthylénique sont dispersés dans un milieu aqueux et polymérisés selon la méthode de la polymérisation radicalaire en émulsion aqueuse, à l'aide d'au moins un amorceur de polymérisation radicalaire, en présence d'au moins une substance solide inorganique finement divisée, dispersée, et d'au moins un adjuvant de dispersion, **caractérisé en ce que**

a) la substance solide anorganique présente un diamètre moyen de particule > 0 et ≤ 100 nm,
b) on utilise de 1 à 1 000 parties en poids de substance solide anorganique pour 100 parties en poids de monomères
c) on utilise de 0,01 à 10 parties en poids d'un composé silicié (composé de type silane) pour 100 parties en poids de monomères, le composé de type silane comportant au moins une groupe Si-OH ou au moins un groupe fonctionnel que, dans de l'eau désionisée est hydrolysé à une température ≤ 100 °C avec formation d'un groupe Si-OH ou d'un groupe Si-O-Si et le composé de type silane ne comportant pas de groupe à insaturation éthylénique, copolymérisable par voie radiculaire,
d) en disposant au préalable au moins une quantité partielle de la substance solide inorganique dans un milieu aqueux de polymérisation sous forme d'une dispersion aqueuse de substance solide, à la suite de cela
e) en ajoutant au milieu aqueux de polymérisation au moins une quantité partielle du composé de type silane par addition dosée pendant une durée de ≥ 5 et ≤ 240 minutes, à la suite de cela
f) en ajoutant éventuellement ≤ 20 % en poids des monomères au milieu aqueux de polymérisation et en effectuant une polymérisation radicalaire, et à la suite de cela
g) en ajoutant par addition dosée la quantité résiduelle éventuellement restante de la substance solide inorganique, la quantité résiduelle éventuellement restante du composé de type silane, la quantité résiduelle éventuellement restante ou la quantité totale des monomères au milieu aqueux de polymérisation, dans des conditions de polymérisation.

**2.** Procédé selon la revendication 1, **caractérisé en ce que** dans l'étape d) du procédé on dispose au préalable ≥ 50 % en poids de la substance solide inorganique.

**3.** Procédé selon la revendication 1 ou 2, **caractérise en ce que** dans l'étape d) du procécé on dispose au préalable la quantité totale de la substance solide anorganique.

**4.** Procédé selon l'une quelconque des revendications 1 à 3, **caractérisé en ce que** l'étape e) du procédé est effectuée à une température ≥ 50 et ≤ 100 °C.

**5.** Procédé selon l'une quelconque des revendications 1 à 4, **caractérisé en ce que** dans l'étape e) du procécé on ajoute par addition dosée ≥ 5 et ≤ 70 % en poids du composé de type silane.

**6.** Procédé selon l'une quelconque des revendications 1 à 5, **caractérisé en ce que** la substance solide inorganique contient du silicium.

7. Procédé selon l'une quelconque des revendications 1 à 6, **caractérisé en ce qu'**on utilise comme substance solide inorganique de l'acide silicique pyrogéné, de l'acide silicique colloïdal et/ou un silicate lamellaire.

8. Procédé selon l'une quelconque des revendications 1 à 7, **caractérisé en ce qu'**à la fin de l'étape e) du procédé le milieu aqueux de polymérisation contient ≤ 10 % en poids de solvant organique, par rapport à la quantité totale d'eau.

9. Procédé selon l'une quelconque des revendications 1 à 8, **caractérisé en ce qu'**on utilise comme composé de type silane un composé de formule générale 1

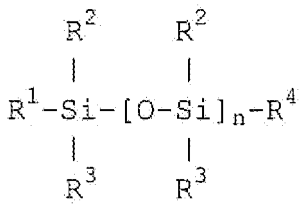

(I)

où

$R^1$ à $R^4$ représentent OH, un groupe alcoxy en $C_1$-$C_4$, un atome d'halogène, un groupe alkyle en $C_1$-$C_{30}$ substitué ou non substitué, un groupe cycloalkyle en $C_5$-$C_{15}$ substitué ou non substitués un groupe alkylène ($C_1$-$C_4$) - $[O-CH_2CH_2]_x$-O-Z, un groupe aryle en $C_6$-$C_{10}$ substitué ou non substitué, un groupe aralkyle en $C_7$-$C_{12}$ substitué ou non substitué,
Z représente un atome d'hydrogène, un groupe allyle en $C_1$-$C_4$ n représente un nombre entier valant de 0 à 5
x représente un nombre entier valant de 1 à 10,

au moins l'un des radicaux $R^1$ à $R^4$ représentant OH, un groupe alcoxy en $C_1$-$C_4$ ou un atome d'halogène,
ou
un composé de formule générale II

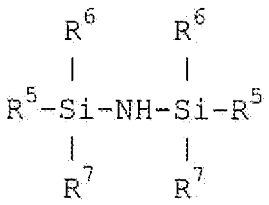

(II)

où

$R^5$ à $R^7$ représentant un groupe alkyle en $C_1$-$C_{30}$ substitué ou non substitué, un groupe cycloalkyle en $C_5$-$C_{15}$ substitué ou non substitué, un groupe aryle en $C_6$-$C_{10}$ substitué ou non substitué, un groupe aralkyle en $C_7$-$C_{12}$ substitué ou non substitué.

10. Procédé selon l'une quelconque des revendications 1 à 9, **caractérisé en ce qu'**on utilise comme composé de type silane le méthyltriméthoxysilane, le n-propyltriméthoxysilane, le n-octyltriméthoxy-silane, le n-décyltriéthoxysilane, le n-hexadécyl-triméthoxysilane, le diméthyldiméthoxysilane, le triméthylméthoxysilane, le 3-acétoxypropyltriméthoxy-silane, le 3-aminopropyltriméthoxysilane, le 3-chloro-propyltriméthoxysilane, le 3-glycidyloxypropyl-triméthoxysilane, le 3-mercaptopropyltriméthoxisilane, le phényltriméthoxysilane et/ou le 1,1,1,3,3,3-hexaméthyldisilazane.

11. Procédé selon l'une quelconque des revendications 1 à 10, **caractérisé en ce qu'**on utilise comme adjuvant de dispersion un émulsifiant anionique et/ou non ionique.

12. Procédé selon l'une quelconque des revendications 1 à 11, **caractérise en ce que** la composition des monomères est choisie de manière qu'après leur polymérisation il en résulte un polymérisat dont la température de transition vitreuse est ≤ 60 °C.

13. Dispersion aqueuse de particules composites, pouvant être obtenue conformément à un procécé selon l'une quelconque des revendication 1 à 12.

14. Utilisation d'une dispersion aqueuse de particules composites selon la revendication 13, en tant que lisant, pour la production d'une couche protectrice, en tant que composant dans des adhésifs, pour la modification de formulations de ciment et de mortier ou dans le diagnostic médical.

15. Poudre de particules composites, pouvant être obtenue par séchage d'une dispersion aqueuse de particules composites selon la revendication 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3544500 A
- US 4421660 A
- US 4608401 A
- US 4981882 A
- EP 104498 A
- EP 505230 A
- EP 572128 A
- GB 2227739 A
- WO 0118081 A
- WO 0129106 A
- WO 03000760 A
- WO 06072464 A
- WO 0224756 A
- WO 0224758 A
- US 200477768 A
- EP 07107552 A
- US 4269749 A
- DE 4419518 A
- EP 767180 A
- DE 3834734 A
- US 4157323 A


### In der Beschreibung aufgeführte Nicht-Patentliteratur


- **Long et al.** *Tianjin Daxue Xuebao,* 1991, vol. 4, 10-15
- **Bourgeat-Lami et al.** *Die Angewandte Makromolekulare Chemie,* 1996, vol. 242, 105-122
- **Paulke et al.** Synthesis Studies of Paramagnetic Polystyrene Latex Particles in Scientific and Clinical Applications of Magnetic Carriers. Plenum Press, 1997, 69-76
- **Armes et al.** *Advanced Materials,* 1999, vol. 11 (5), 408-410
- **Van Herk et al.** *Macromolecules,* 2006, vol. 39, 4654-4656
- **Bourgeat-Lami et al.** *Progress in Solid State Chemistry,* 2006, vol. 34, 121-137
- **E. Matijevic.** *Chem. Mater,* 1993, vol. 5, 412-426
- Ullmann's Encyclopedia of Industrial Chemistry. Verlag Chemie, 1992, vol. A 23, 583-660
- **D.F. Evans ; H. Wennerström.** The Colloidal Domain. Verlag Chemie, 1994, 363-405
- **R.J. Hunter.** Foundations of Colloid Science. Clarendon Press, 1991, vol. I, 10-17
- Analysis of Polymer Dispersions with an Eight-Cell-AUC-Multiplexer: High Resolution Particle Size Distribution and Density Gradient Techniques. **S.E. Harding et al.** Analytical Ultracentrifugation in Biochemistry and Polymer Science. Royal Society of Chemistry, 1992, 147-175
- Methoden der organischen Chemie. **Houben-Weyl.** Makromolekulare Stoffe. Georg-Thieme-Verlag, 1961, 411-420
- **Houben-Weyl.** Methoden der organischen Chemie, Band XIV/1, Makromolekulare Stoffe. Georg-Thieme-Verlag, 1961, 192-208
- **H. Stache.** Tensid-Taschenbuch. Carl-Hanser-Verlag, 1981
- **McCutcheon's.** Emulsifiers & Detergents. MC Publishing Company, 1989
- **T.G. Fox.** *Bull. Am. Phys. Soc.,* 1956, vol. 1, 123
- Ullmann's Encyclopädie der technischen Chemie. Verlag Chemie, 1980, vol. 19, 18
- Ullmann's Encyclopedia of Industrial Chemistry. Verlag Chemie, 1992, vol. A21, 169
- **J. Brandrup ; E.H. Immergut.** Polymer Handbook. J. Wiley, 1966
- POLYMER HANDBOOK. J.Wiley, 1975
- POLYMER HANDBOOK. J. Wiley, 1989
- **J. Brandrup ; E.H. Immergut.** Polymerhandbook. John Weley & Sons, 1989, 133-141
- **K. Mosbach ; L. Andersson.** *Nature,* 1977, vol. 270, 259-261
- **P.L. Kronick.** *Science,* 1978, vol. 200, 1074-1076